(19) **Europäisches Patentamt / European Patent Office / Office européen des brevets**

(11) **EP 4 487 514 B1**

(12) **EUROPEAN PATENT SPECIFICATION**

(45) Date of publication and mention of the grant of the patent:
**28.01.2026 Bulletin 2026/05**

(21) Application number: **23709949.4**

(22) Date of filing: **03.03.2023**

(51) International Patent Classification (IPC):
**H04L 5/00** *(2006.01)*

(52) Cooperative Patent Classification (CPC):
**H04L 5/0094; H04L 5/0053;** H04L 5/0023;
H04L 5/0035; H04L 5/0044

(86) International application number:
**PCT/EP2023/055457**

(87) International publication number:
**WO 2023/166185 (07.09.2023 Gazette 2023/36)**

(54) **EXPLICIT UNIFIED TRANSMISSION CONFIGURATION INDICATOR (TCI) STATE INDEX CONFIGURATION FOR DOWNLINK (DL) TRANSMISSION**

STATUSINDEXKONFIGURATION EINES EXPLIZITEN EINHEITLICHEN ÜBERTRAGUNGSKONFIGURATIONSINDIKATORS (TCI) FÜR DOWNLINK-ÜBERTRAGUNG

CONFIGURATION D'INDICE D'ÉTAT D'UN INDICATEUR DE CONFIGURATION DE TRANSMISSION (TCI) UNIFIÉE EXPLICITE POUR UNE TRANSMISSION EN LIAISON DESCENDANTE (DL)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.03.2022 US 202263316805 P**

(43) Date of publication of application:
**08.01.2025 Bulletin 2025/02**

(60) Divisional application:
**25223676.5**

(73) Proprietor: **Telefonaktiebolaget LM Ericsson (publ)**
**164 83 Stockholm (SE)**

(72) Inventors:
• **NILSSON, Andreas**
**413 13 Gothenburg (SE)**
• **TIDESTAV, Claes**
**164 83 Bålsta (SE)**
• **GAO, Shiwei**
**Ottawa, Ontario K2J 0H5 (CA)**
• **MURUGANATHAN, Siva**
**Ottawa, Ontario K2S 0R3 (CA)**

(74) Representative: **Ericsson**
**Patent Development**
**Torshamnsgatan 21-23**
**164 80 Stockholm (SE)**

(56) References cited:
**WO-A1-2022/031546**

• **OPPO: "Enhancements on Multi-Beam Operation", vol. RAN WG1, no. e-Meeting; 20210412 - 20210420, 7 April 2021 (2021-04-07), XP052177095, Retrieved from the Internet <URL:https://ftp.3gpp.org/tsg_ran/WG1_RL1/ TSGR1_104b-e/Docs/R1-2102378.zip R1-2102378.docx> [retrieved on 20210407]**

**Description**

TECHNICAL FIELD

The present disclosure relates to wireless communications, and in particular, to explicit unified transmission configuration indicator (TCI) state index configuration for downlink (DL) transmissions.

BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs. Sixth Generation (6G) wireless communication systems are also under development.

NR Frame Structure and Resource Grid

NR uses CP-OFDM (Cyclic Prefix Orthogonal Frequency Division Multiplexing) in both downlink (i.e., from a network node, gNB, or base station, to a user equipment (UE) or wireless device (WD)) and uplink (i.e., from WD to gNB). Discrete Fourier transform (DFT) spread OFDM is also supported in the uplink. In the time domain, NR downlink and uplink are organized into equally-sized subframes of 1ms each. A subframe is further divided into multiple slots of equal duration. The slot length depends on subcarrier spacing. For subcarrier spacing of $\Delta f$ = 15$kHz$, there is only one slot per subframe and each slot consists of 14 OFDM symbols.

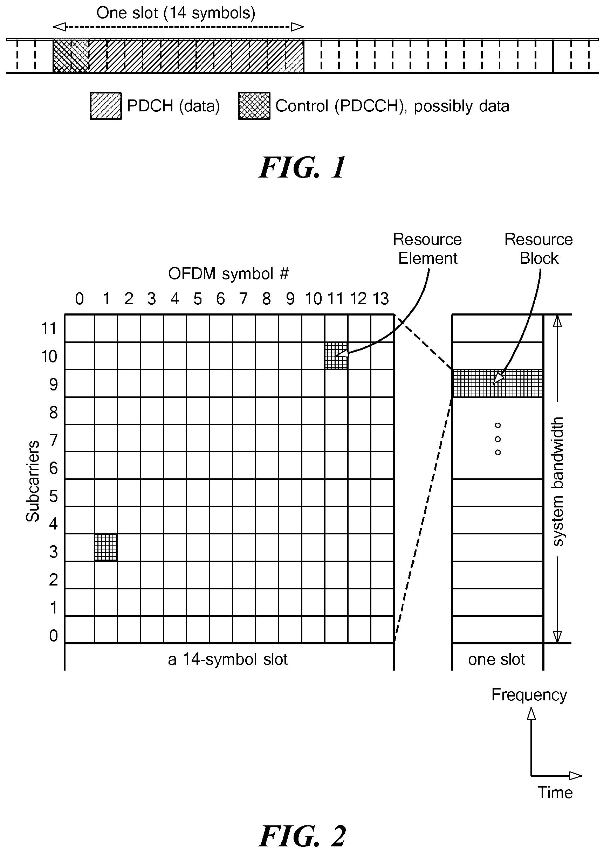

Data scheduling in NR is typically on a per slot basis. FIG 1 shows an example of a 14-symbol slot, where the first two symbols contain physical downlink control channel (PDCCH) and the remaining slots contain a physical shared data channel (PDCH): either a PDSCH (physical downlink shared channel) or a PUSCH (physical uplink shared channel).

Different subcarrier spacing values are supported in NR. The supported subcarrier spacing values (also referred to as different numerologies) are given by $\Delta f$ = (15 × $2^\mu$)$kHz$ where $\mu \in$ 0,1,2,3,4 . $\Delta f$ = 15$kHz$ is the basic subcarrier spacing. The slot duration at different subcarrier spacings is given by $\frac{1}{2^\mu} \, ms$ .

In the frequency domain, a system bandwidth is divided into resource blocks (RBs), each corresponding to 12 contiguous subcarriers. The RBs are numbered starting with 0 from one end of the system bandwidth. The basic NR physical time-frequency resource grid is illustrated in FIG. 2, where only one resource block (RB) within a 14-symbol slot is shown. One OFDM subcarrier during one OFDM symbol interval forms one resource element (RE).

Downlink and uplink transmissions may be dynamically scheduled in which the network node (e.g., gNB) transmits a DL assignment or an uplink grant via downlink control information (DCI) over a PDCCH (Physical Downlink Control Channel) to a WD for each PDSCH or PUSCH transmission. Or DL and UL transmissions may be scheduled semi-persistently (SPS) in which one or more DL SPS or UL configured grants (CGs) are semi-statically configured and each may be activated or deactivated by a DCI.

CORESET and Search Space

A WD monitors a set of PDCCH candidates for potential PDCCHs. A PDCCH candidate consists of $L \in$ [1,2,4,8,16] control-channel elements (CCEs) in a Control Resource Set (CORESET). A CCE consists of 6 resource-element groups (REGs) where a REG equals one RB during one OFDM symbol. $L$ is referred to as the CCE aggregation level.

The set of PDCCH candidates is defined in a PDCCH search space (SS) set. A SS set may be a Common Search Space (CSS) set or a WD Specific Search Space (USS) set. A WD may be configured with up to 10 SS sets per bandwidth part (BWP) for monitoring PDCCH candidates.

Each SS set is associated with a CORESET. A CORESET consists of $N_{\mathrm{RB}}^{\mathrm{CORESET}}$ resource blocks in frequency domain and $N_{\mathrm{symb}}^{\mathrm{CORESET}} \in \{1,2,3\}$ consecutive OFDM symbols in the time domain. In NR 3GPP Technical Release 15 (3GPP Rel-15), a WD may be configured with up to 3 CORESETs per BWP.

For each SS set, a WD is configured with the following parameters comprising:

- a search space set index $s$, $0 \le s < 40$ ;
- an association between the search space set $s$ and a CORESET $p$ ;

- a PDCCH monitoring periodicity of $k_s$ slots and a PDCCH monitoring offset of $o_s$ slots;
- a PDCCH monitoring pattern within a slot, indicating first symbol(s) of the CORESET within a slot for PDCCH monitoring;
- a duration of $T_s < k_s$ slots indicating a number of slots that the search space set exists;
- a number of PDCCH candidates $M_s^{(L)}$ per CCE aggregation level L;
- an indication that search space set s is either a CSS set or a USS set; and
- DCI formats to monitoring.

A WD determines a PDCCH monitoring occasion on an active DL BWP from the PDCCH monitoring periodicity, the PDCCH monitoring offset, and the PDCCH monitoring pattern within a slot. For search space set $s$, the WD determines that a PDCCH monitoring occasion(s) exists in slot $n_{s,f}^{\mu}$ in frame $n_f$ if $(n_f \cdot N_{slot}^{frame,\mu} + n_{s,f}^{\mu} - o_s) \bmod k_s = 0$ , where $N_{slot}^{frame,\mu}$ is the number of slots per radio frame. The WD monitors PDCCH candidates for search space set s for $T_s$ consecutive slots, starting from slot $n_{s,f}^{\mu}$ , and does not monitor PDCCH candidates for search space set s for the next $k_s - T_s$ consecutive slots.

## TCI states and QCL

A Transmission Configuration indication (TCI) state contains Quasi Co-location (QCL) information between the Demodulation Reference Signal (DMRS) of PDSCH and one or two DL reference signals (RS) such as a CSI-RS (Channel State Information Reference Signal) or a SSB (Synchronization Signal Block). Two antenna ports are said to be quasi-collocated (QCL) if certain channel parameters associated with one of the two antenna ports may be inferred from the other antenna port.

The supported QCL information types in NR include:

- 'QCL-TypeA': {Doppler shift, Doppler spread, average delay, delay spread};
- 'QCL-TypeB': {Doppler shift, Doppler spread};
- 'QCL-TypeC': {Doppler shift, average delay}; and
- 'QCL-TypeD': {Spatial Rx parameter}.

A list of TCI states may be radio resource control (RRC) configured in a higher layer parameter PDSCH-Config information element (IE). The 3GPP Technical Standard (TS) 38.331 e.g. V16.7.0 (2021-12, section 6.3.2 provides details. Up to 8 TCI states from the list may be activated with a medium access control (MAC) control element (CE). In NR 3GPP Rel-15, one TCI state is activated by a MAC CE for each TCI codepoint of a TCI field in DCI, where up to 8 TCI codepoints may be supported (see 3GPP TS 38.321 e.g. V15.12.0 (2021-03), section 6.1.3.14 for details). In NR 3GPP Rel-16, up to two TCI states may be activated by a MAC CE for each TCI codepoint (see 3GPP TS 38.321 V16.7.0 (2021-12), section 6.1.3.24). For dynamically scheduled PDSCH, one of the TCI codepoints is indicated in the TCI field of the DCI ( DCI format 1_1 or DCI format 1_2) scheduling the PDSCH for PDSCH reception. For example, if an SSB or CSI-RS is configured as the QCL-typeD source reference signal (RS) in an activated TCI state indicated to a PDSCH, the same receive beam for receiving the SSB or CSI-RS would be used by a WD to receive the PDSCH.

## Beam management with unified TCI framework

In NR, downlink beam management is performed by conveying spatial QCL ('Type D') assumptions to the WD through TCI states.

The NR 3GPP Rel-15 and 3GPP Rel-16 beam management framework allows great flexibility for the network to instruct the WD to receive signals from different spatial directions in DL with a cost of large signaling overhead and slow beam switch. These limitations are particularly noticeable and costly when WD movement is considered. One example is that beam update using downlink control information (DCI) may only be performed for PDSCH. MAC-CE and/or RRC is required to update the beam for other reference signals/channels, which introduces extra overhead and latency.

Furthermore, in a majority of cases, the network transmits to and receives from a WD in the same direction for both data and control. Hence, using a separate framework (TCI state respective spatial relations) for different channels/signals complicates the implementations.

In 3GPP Rel-17, a unified TCI state-based beam framework was introduced to simplify beam management in FR2, in which a common beam represented by a TCI state may be activated or indicated to a WD and the common beam is applicable for multiple channels or signals such as PDCCH and PDSCH. The common beam framework is also referred to as a unified TCI state framework. A TCI state configured under the newly-introduced 3GPP Rel-17 framework will henceforth be referred to as a unified TCI state.

The new framework may be RRC configured in one of two modes of operation, i.e., "Joint DL/UL TCI" or "Separate DL/UL TCI". For "Joint DL/UL TCI", one common Joint TCI state is used for both DL and UL signals/channels. For "Separate DL/UL TCI", one common DL-only TCI state is used for DL channels/signals and one common UL-only TCI state is used for UL signals/channels.

A unified TCI state for separate DL/UL or Joint DL/UL comprises identifiers of two QCL source reference signals as shown below, where the first RS is a QCL source RS for one of {typeA, typeB, typeC} QCL types, while the second RS is a QCL source RS for QCL typeD. The second RS is used to indicate a spatial beam or filter associated with the unified TCI state. An example ASN.1 code for configuring separate UL/DL or Joint DL/UL TCI state is shown below.

```
DLorJoint-TCIState-r17 ::=        SEQUENCE {
    tci-StateUnifiedId-r17            DLorJoint-TCIState-Id-r17,

    tci-StateType-r17                ENUMERATED {DLOnly, JointULDL},

    qcl-Type1-r17                    QCL-Info,

    qcl-Type2-r17                    QCL-Info   OPTIONAL   -- Need R

}

QCL-Info ::=              SEQUENCE {

    cell                  ServCellIndex   OPTIONAL,   -- Need R

    bwp-Id                  BWP-Id        OPTIONAL, -- Cond CSI-RS-Indicated

    referenceSignal           CHOICE {

        csi-rs                NZP-CSI-RS-ResourceId,

        ssb                   SSB-Index

    },

    qcl-Type                ENUMERATED {typeA, typeB, typeC, typeD},


...;
```

A unified TCI state may be updated in a similar way as the TCI state update for PDSCH in 3GPP Rel-15/16, i.e., with one of two alternatives:

- Two-stage: RRC signaling is used to configure a number of unified TCI states in higher layer parameter *PDSCH-config,* and a MAC-CE is used to activate one of the unified TCI states; and
- Three-stage: RRC signaling is used to configure a number of unified TCI states in *PDSCH-config,* a MAC-CE is used to activate up to 8 unified TCI states, and a 3-bit TCI bitfield in DCI is used to indicate one of the activate unified TCI states.

The one activated or indicated unified TCI state will be used in subsequent for both PDCCH and PDSCH transmissions until a new unified TCI state is activated or indicated.

The existing DCI formats 1_1 and 1_2 are used for unified TCI state of beam indication (i.e., TCI state indication/update), both with and without DL data assignment, i.e., PDSCH. For DCI formats 1_1 and 1_2 with DL assignment. Acknowledgement or non-acknowledgement (ACK/NACK) of the PDSCH may be used as an indication of successful reception of beam indication. For DCI formats 1_1 and 1_2 without DL assignment, a new hybrid automatic repeat request (HARQ) ACK/NACK mechanism analogous to that for SPS (semi-persistent scheduling) PDSCH release with both type-1 and type-2 HARQ-ACK codebook is used, where upon a successful reception of the beam indication DCI, the WD sends a HARQ-ACK.

For DCI-based beam indication, the first slot to apply the indicated TCI is at least Y symbols after the last symbol of the acknowledgment of the joint or separate DL/UL beam indication. The Y symbols are configured by the network node (gNB) based on WD capability, which is also reported in units of symbols.

## Multi-TRP PDCCH repetition

In NR 3GPP Rel-17, PDCCH repetition was introduced for more robust PDCCH reception in which a PDCCH is transmitted over two transmission and reception points (TRPs) on different time or frequency resources.

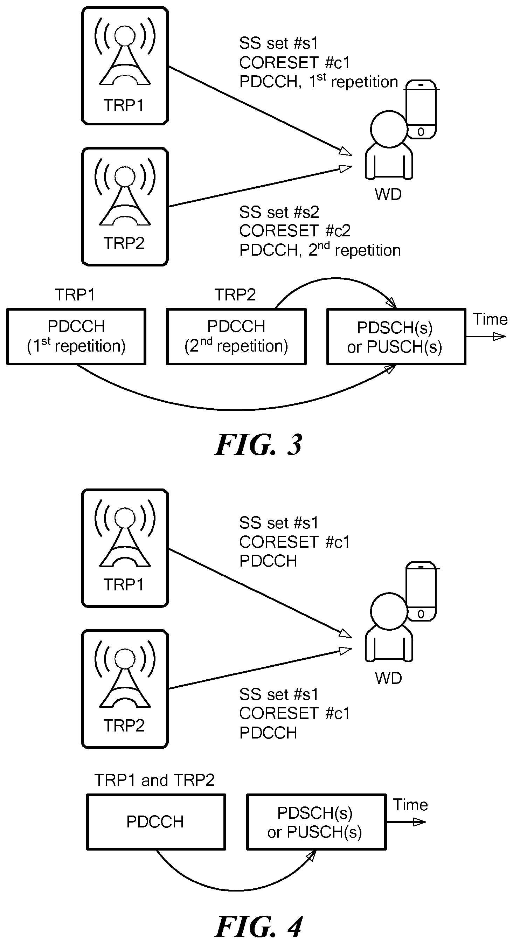

An example is shown in FIG. 3 where a PDCCH is repeated over two TRPs at different times. The first PDCCH repetition is sent in a PDCCH candidate in CORESET #c1 associated with SS set #s1 and the second PDCCH repetition is sent in another PDCCH candidate in CORESET #c2 associated with SS set #s2, where SS sets #s1 and #s2 are linked. CORESET #c1 and CORESET #c2 are each activated with a transmission configuration indicator (TCI) state associated with the respective TRP.

Two linked SS sets need to be configured with a same set of parameters such as periodicity, slot offset, number of monitoring occasions within a slot, etc. For a giving control channel element (CCE) aggregation level and two linked SS sets, the location of one PDCCH candidate in one SS set may be obtained from a PDCCH candidate in the other SS set. When performing PDCCH detection, a WD may detect PDCCH individually in each PDCCH candidate or jointly by soft combining of the two PDCCH candidates.

## SFN PDCCH

In NR 3GPP Rel-17, single frequency network (SFN) based PDCCH was also introduced for more robust PDCCH reception in which a PDCCH is transmitted simultaneously from two TRPs in a same time and frequency resource. An example is shown in FIG. 4 where a single CORESET and the associated SS set are associated to both TRPs. This is indicated to a WD by both an RCC configuration of SFN PDCCH and a CORESET activated with two TCI states.

## Multi-TRP PDSCH schemes

In NR 3GPP Rel-16, PDSCH transmission over two TRPs was introduced, including a non-coherent joint transmission (NC-JT) scheme, two frequency domain multiplexing (FDM) schemes, and two time domain multiplexing (TDM) schemes. In these multi-TRP PDSCH schemes, each TRP is represented by an indicated TCI state. In NC-JT, a PDSCH in transmitted over two TRPs in a same time and frequency resource with different multiple input multiple output (MIMO) layers of the PDSCH transmitted from different TRPs. For example, 2 layers may be transmitted from a first TRP and 1 layer may be transmitted from a second TRP for a total of 3 layers. For NC-JT based PDSCH scheduling, two TCI states are indicated in a TCI codepoint of DCI scheduling the PDSCH. The DMRS ports in a first and second CDM groups are associated with the first and second TCI states, respectively.

In frequency duplex multiplexing (FDM) schemes, different frequency domain resources of a PDSCH are allocated to different TRPs. In FDM scheme A, a single PDSCH is transmitted and part of the PDSCH is sent from one TRP and the rest from the other TRP. In FDM scheme B, a PDSCH is repeated over two TRPs. For FDM based multi-TRP PDSCH scheduling, two TCI states are indicated in a TCI codepoint of DCI scheduling the PDSCH. The demodulation reference signal (DMRS) ports in a first and second set of scheduled RBs are associated with the first and second TCI states, respectively.

In time division multiplex (TDM) schemes, a PDSCH is repeated in multiple times, each over one of two TRPs. In TDM scheme A, a PDSCH is repeated two times within a slot, one from each TRP. While in TDM scheme B (or slot-based TDM scheme), a PDSCH is repeated in consecutive slots, either in a cyclic manner from two TRPs in which the PDSCH is transmitted alternatively from a first TRP in one slot and a second TRP in the next slot, or in a sequential manner in which PDSCH is transmitted alternatively from the first and second TRPs every two consecutive slots. For TDM based multi-TRP PDSCH scheduling, two TCI states are indicated in a TCI codepoint of DCI scheduling the PDSCH. The DMRS ports in a first and second set of PDSCH transmission occasions are associated with the first and second TCI states, respectively. The first and second set of PDSCH transmission occasions are determined according to the mapping type, i.e., cyclic or sequential mapping.

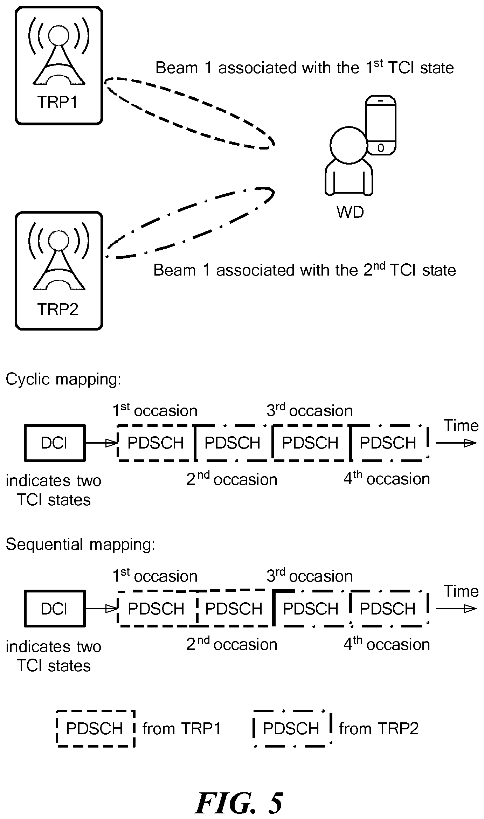

An example of TDM Scheme B is shown in the example of FIG. 5, where 4 PDSCH repetitions are scheduled from two TRPs. In case of cyclic mapping, the $1^{st}$ and $3^{rd}$ PDSCH occasions are associated with the $1^{st}$ TCI state and the $2^{nd}$ and $4^{th}$ PDSCH occasions are associated with the $2^{nd}$ TCI state indicated in the DCI. In case of sequential mapping, the $1^{st}$ and $2^{nd}$ PDSCH occasions are associated with the $1^{st}$ TCI state and the $3^{rd}$ and $4^{th}$ PDSCH occasions are associated with the $2^{nd}$ TCI state indicated in the DCI.

In the unified TCI state framework introduced in 3GPP Rel-17, only a single unified TCI state for each TCI codepoint may be activated by MAC CE or indicated by DCI at a time. Thus, it is only applicable to data transmissions from a single TRP. The mTRP PDSCH schemes supported in 3GPP Rel-16 are not supported by the unified TCI framework introduced in 3GPP Rel-17 (i.e., the mTRP PDSCH schemes introduced in 3GPP Rel-16 rely on the 3GPP Rel-15 TCI state framework).

It has been considered in 3GPP that the unified TCI state framework will be extended to support mTRP schemes in NR 3GPP Rel-18. To support mTRP PDSCH schemes, multiple unified TCI states need to be activated/indicated to the WD. How to associate PDSCH transmission to one or more of the multiple unified TCI states is an open problem.

WO 2022/031546 A1 describes that a wireless transmit/receive unit (WTRU) may be configured to receive configuration information associated with a first transmission configuration indicator (TCI) state group and a second TCI state group. The WTRU may be configured to report first respective measured downlink received power values and first respective determined power reduction values. The WTRU may be configured to report second respective measured downlink received power values and second respective determined power reduction values. The WTRU may be configured to receive an indication of the first TCI state group via a downlink transmission. The WTRU may be configured to determine a first TCI state from the first TCI state group based on downlink received power information and power reduction information. The WTRU may be configured to send an uplink transmission based on the first determined TCI state.

OPPO, "Enhancements on Multi-Beam Operation", 3GPP DRAFT, R1-2102378 (2021-07-04) describes aspects on unified TCI state and common beam operation, inter-cell mobility, UL beam selection and MPE issues.

SUMMARY

It may be an object of the present disclosure to provide techniques which may enable an association of PDSCH transmission and/or PDCCH transmission to one or more of multiple unified TCI states for multi-TRP based transmission in a simple way.

A network node is defined by the appended claims 1, 18. Corresponding methods are defined by the appended claims 3, 14. A wireless device is defined by the appended claims 8, 23. Corresponding methods are defined by the appended claims 10, 19.

The invention is defined by the independent claims. Further embodiments are explained in the dependent claims.

Some embodiments advantageously provide methods, network nodes and wireless devices for explicit unified transmission configuration indicator (TCI) state index configuration for downlink (DL) transmissions.

Multiple solutions for determining a spatial filter for PDSCH and/or PDCCH transmissions for mTRP operation for the unified TCI state framework using explicitly configured TCI state pointers are described.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

FIG. 1 is a NR time-domain structure with 15kHz subcarrier spacing;
FIG. 2 is a NR physical resource grid;
FIG. 3 is an example of PDCCH repetition from multiple TRPs;
FIG. 4 is an example of SFN PDCCH over two TRPs;
FIG. 5 is an example of PDSCH repetition from multiple TRPs with TDM Scheme B;
FIG. 6 is a schematic diagram of an example network architecture illustrating a communication system connected via an intermediate network to a host computer according to the principles in the present disclosure;
FIG. 7 is a block diagram of a host computer communicating via a network node with a wireless device over an at least partially wireless connection according to some embodiments of the present disclosure;
FIG. 8 is a flowchart illustrating example methods implemented in a communication system including a host computer, a network node and a wireless device for executing a client application at a wireless device according to some embodiments of the present disclosure;
FIG. 9 is a flowchart illustrating example methods implemented in a communication system including a host computer, a network node and a wireless device for receiving user data at a wireless device according to some embodiments of the present disclosure;
FIG. 10 is a flowchart illustrating example methods implemented in a communication system including a host computer, a network node and a wireless device for receiving user data from the wireless device at a host computer according to some embodiments of the present disclosure;
FIG. 11 is a flowchart illustrating example methods implemented in a communication system including a host computer, a network node and a wireless device for receiving user data at a host computer according to some embodiments of the present disclosure;
FIG. 12 is a flowchart of an example process in a network node for explicit unified transmission configuration indicator (TCI) state index configuration for downlink (DL) transmissions;

FIG. 13 is a flowchart of an example process in a wireless device for explicit unified transmission configuration indicator (TCI) state index configuration for downlink (DL) transmissions;

FIG. 14 is a flowchart of another example process in a network node for explicit unified transmission configuration indicator (TCI) state index configuration for downlink (DL) transmissions;

FIG. 15 is a flowchart of another example in a wireless device for explicit unified transmission configuration indicator (TCI) state index configuration for downlink (DL) transmissions;

FIG. 16 is a flowchart of another example process in a network node for explicit unified transmission configuration indicator (TCI) state index configuration for downlink (DL) transmissions;

FIG. 17 is a flowchart of another example in a wireless device for explicit unified transmission configuration indicator (TCI) state index configuration for downlink (DL) transmissions;

FIG. 18 is an example of activation and indication of unified TCI states for DL mTRP based transmission under a unified TCI state framework; and

FIG. 19 is an example list/index of indicated/activated TCI states for a codepoint of a TCI field in DCI.

DETAILED DESCRIPTION

Before describing in detail example embodiments, it is noted that the embodiments reside primarily in combinations of apparatus components and processing steps related to explicit unified transmission configuration indicator (TCI) state index configuration for downlink (DL) transmissions. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein may be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein may be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It may be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, may be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide explicit unified transmission configuration indicator (TCI) state index configuration for downlink (DL) transmissions.

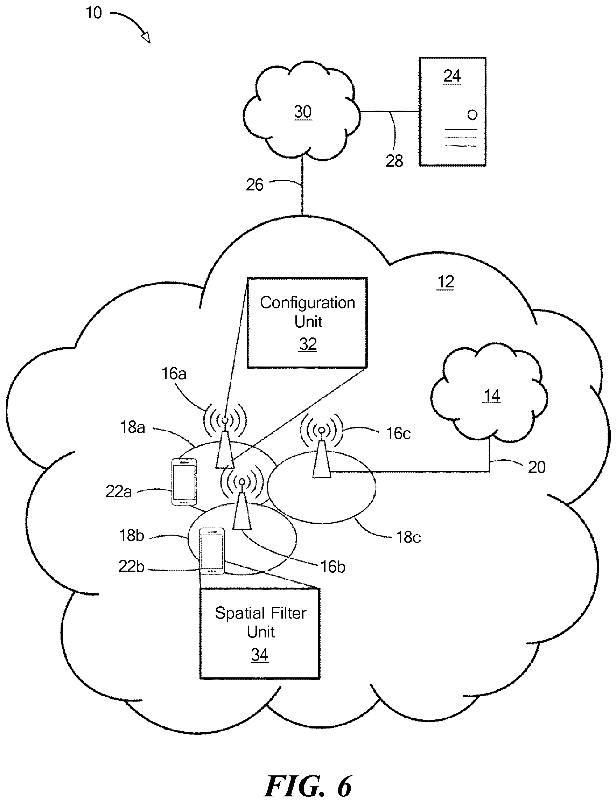

Referring again to the drawing figures, in which like elements are referred to by like reference numerals, there is shown in FIG. 6 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 may be in simultaneous communication and/or configured to separately communicate with more than one network node 16 and more than one type of network node 16. For example, a WD 22 may have dual connectivity with a network node 16 that supports LTE and the same or a different network node 16 that supports NR. As an example, WD 22 may be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 6 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a configuration unit 32 which may be configured to configure the WD (22) with a radio resource control, RRC, configuration of at least one transmission configuration indicator, TCI, state pointer, the at least one TCI state pointer being associated with at least one joint/downlink, DL, TCI state. The configuration unit 32 may also be configured to configure the WD with a radio resource control, RRC, configuration of at least one transmission configuration indicator, TCI, state pointer, the at least one TCI state pointer being used to indicate an association between at least one scheduled physical downlink shared channel, PDSCH, transmission and at least one joint/downlink, DL, TCI state. The configuration unit 32 may also be configured to configure the WD with a RRC configuration of transmission configuration indicator (TCI) state pointers, a first TCI state pointer being associated with a first indicated Joint/downlink (DL) TCI state, a second TCI state pointer being associated with a second indicated Joint/DL TCI state.

A wireless device 22 is configured to include a spatial filter unit 34 which may be configured to determine at least one spatial filter, the at least one spatial filter being used for the at least one PDSCH, the at least one spatial filter being determined based at least in part on one of the first and second joint/DL TCI state selected based at least in part on the at least one TCI state pointer. The spatial filter unit 34 may also be configured to determine first and second spatial filters, the first spatial filter being determined for a first PDSCH reception based on a first one of an activated and indicated unified TCI state associated with the first TCI state pointer, the second spatial filter being determined for a second PDSCH reception based on a second one of an activated and indicated unified TCI state associated with the second TCI state pointer.

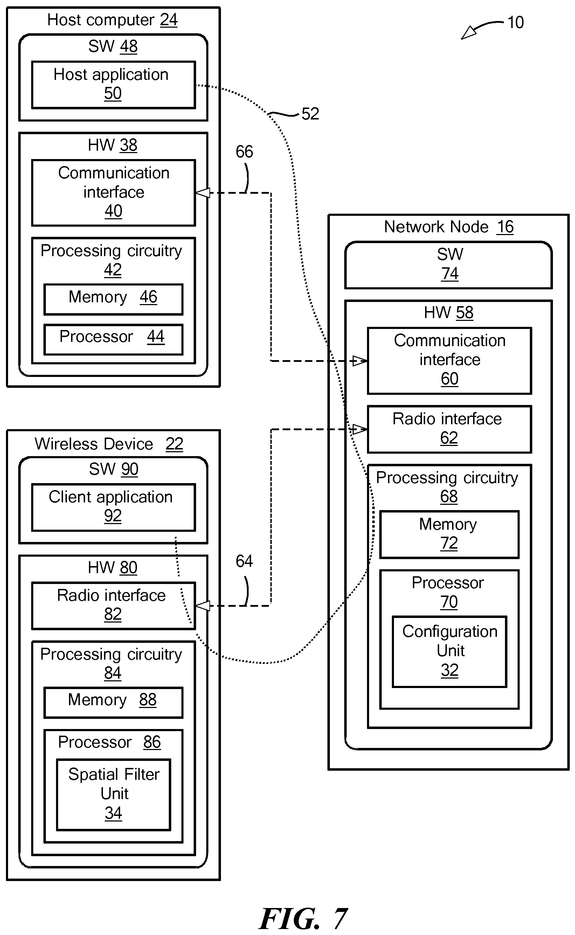

Example implementations, in accordance with an embodiment, of the WD 22, network node 16 and host computer 24 discussed in the preceding paragraphs will now be described with reference to FIG. 7. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include configuration unit 32 which is configured to configure the WD with a radio resource control (RRC) configuration of transmission configuration indicator (TCI) state pointers, a first TCI state pointer being associated with a first joint/downlink (DL) TCI state, a second TCI state pointer being associated with a second joint/DL TCI state. The configuration unit 32 may also be configured to configure the WD with a radio resource control, RRC, configuration of at least one transmission configuration indicator, TCI, state pointer, the at least one TCI state pointer being used to indicate an association between at least one scheduled physical downlink shared channel, PDSCH, transmission and at least one joint/downlink, DL, TCI state.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include spatial filter unit 34 which is configured to determine first and second spatial filters, the first spatial filter being determined for the first PDSCH reception based at least in part on a first one of an activated and indicated unified TCI state associated with the first TCI state pointer, the second spatial filter being determined for the second PDSCH reception based at least in part on a second one of an activated and indicated unified TCI state associated with the second TCI state pointer.

In some embodiments, the inner workings of the network node 16, WD 22, and host computer 24 may be as shown in FIG. 2 and independently, the surrounding network topology may be that of FIG. 6.

In FIG. 7, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors, etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/ supporting/ending a transmission to the WD 22, and/or preparing/terminating/ maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/ supporting/ending a transmission to the network node 16, and/or preparing/ terminating/maintaining/-supporting/ending in receipt of a transmission from the network node 16.

Although FIGS. 6 and 7 show various "units" such as configuration unit 32 and spatial filter unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

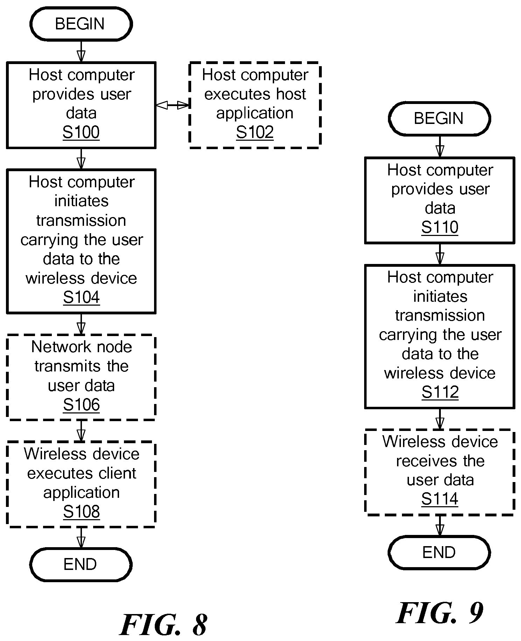

FIG. 8 is a flowchart illustrating an example method implemented in a communication system, such as, for example, the communication system of FIGS. 6 and 7, in accordance with one embodiment. The communication system may include a host computer 24, a network node 16 and a WD 22, which may be those described with reference to FIG. 7. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 9 is a flowchart illustrating an example method implemented in a communication system, such as, for example, the communication system of FIG. 6, in accordance with one embodiment. The communication system may include a host computer 24, a network node 16 and a WD 22, which may be those described with reference to FIGS. 6 and 7. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

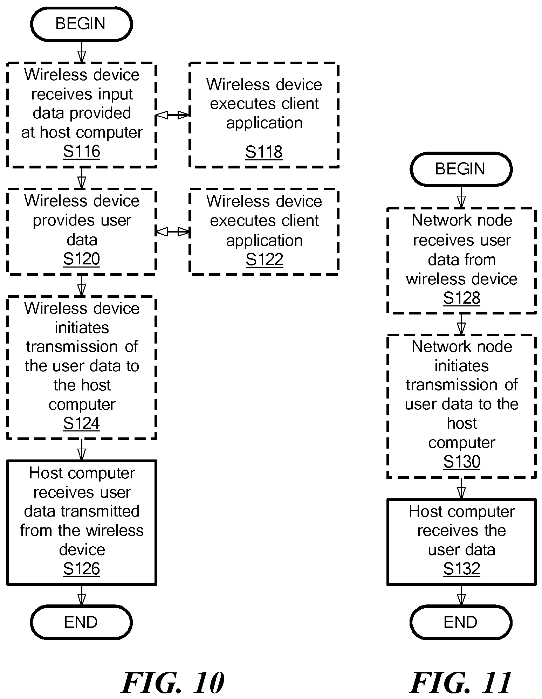

FIG. 10 is a flowchart illustrating an example method implemented in a communication system, such as, for example, the communication system of FIG. 6, in accordance with one embodiment. The communication system may include a host computer 24, a network node 16 and a WD 22, which may be those described with reference to FIGS. 6 and 7. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 11 is a flowchart illustrating an example method implemented in a communication system, such as, for example, the communication system of FIG. 6, in accordance with one embodiment. The communication system may include a host computer 24, a network node 16 and a WD 22, which may be those described with reference to FIGS. 6 and 7. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

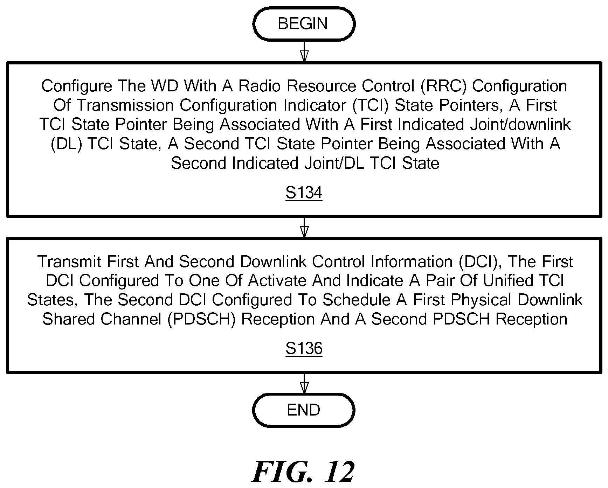

FIG. 12 is a flowchart of an example process in a network node 16 for explicit unified transmission configuration indicator (TCI) state index configuration for downlink (DL) transmissions. One or more blocks described herein may be performed by one or more elements of network node 16 such as by one or more of processing circuitry 68 (including the configuration unit 32), processor 70, radio interface 62 and/or communication interface 60. Network node 16 such as via processing circuitry 68 and/or processor 70 and/or radio interface 62 and/or communication interface 60 is configured to configure the WD with a radio resource control (RRC) configuration of transmission configuration indicator (TCI) state pointers, a first TCI state pointer being associated with a first joint/downlink (DL) TCI state, a second TCI state pointer being associated with a second joint/DL TCI state (Block S134). The process also includes transmitting first and second downlink control information (DCI), the first DCI configured to one of activate and indicate a pair of unified TCI states, the second DCI configured to schedule a first physical downlink shared channel (PDSCH) reception and a second PDSCH reception (Block S136). In some embodiments, the RRC configuration is contained in PDSCH-Config.

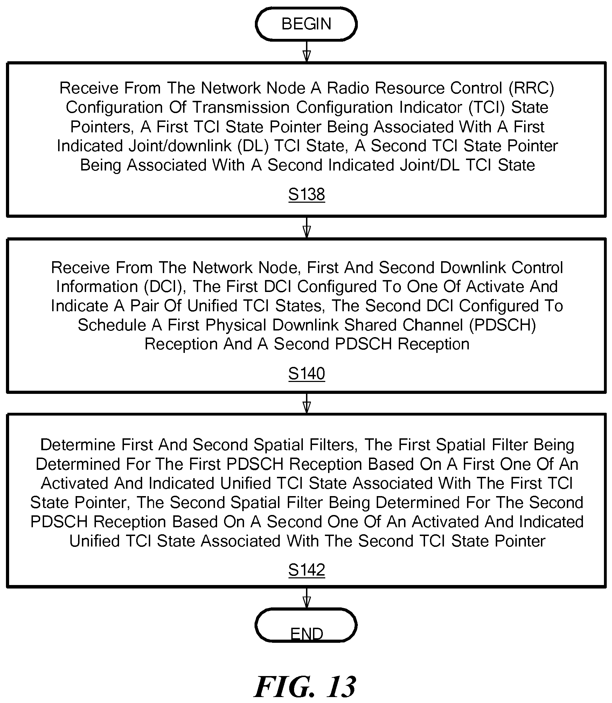

FIG. 13 is a flowchart of an example process in a wireless device 22 according to some embodiments of the present disclosure. One or more blocks described herein may be performed by one or more elements of wireless device 22 such as by one or more of processing circuitry 84 (including the spatial filter unit 34), processor 86, radio interface 82 and/or communication interface 60. Wireless device 22 such as via processing circuitry 84 and/or processor 86 and/or radio interface 82 is configured to receive from the network node a radio resource control (RRC) configuration of transmission configuration indicator (TCI) state pointers, a first TCI state pointer being associated with a first joint/downlink (DL) TCI state, a second TCI state pointer being associated with a second joint/DL TCI state (Block S138). The process also includes receiving from the network node, first and second downlink control information (DCI), the first DCI configured to one of activate and indicate a pair of unified TCI states, the second DCI configured to schedule a first physical downlink shared channel (PDSCH) reception and a second PDSCH reception (Block S140). The process further includes determining first and second spatial filters, the first spatial filter being determined for the first PDSCH reception based at least in part on a first one of an activated and unified TCI state associated with the first TCI state pointer, the second spatial filter being determined for the second PDSCH reception based at least in part on a second one of an activated and unified TCI state associated with the second TCI state pointer (Block S142).

In some embodiments, the RRC configuration is contained in PDSCH-Config. In some embodiments, determining one of the first and second spatial filter is based at least in part on a codepoint of a DCI bitfield in the DCI used to trigger the PDSCH. In some embodiments, determining one of the first and second spatial filter is based at least in part on a CDM group number of the antenna (DMRS) ports in the DCI used to trigger the PDSCH. In some embodiments, a time gap of Y symbols is configured between reception of the first DCI and reception of a corresponding PDSCH, where Y is configured by the network node based at least in part on WD capabilities.

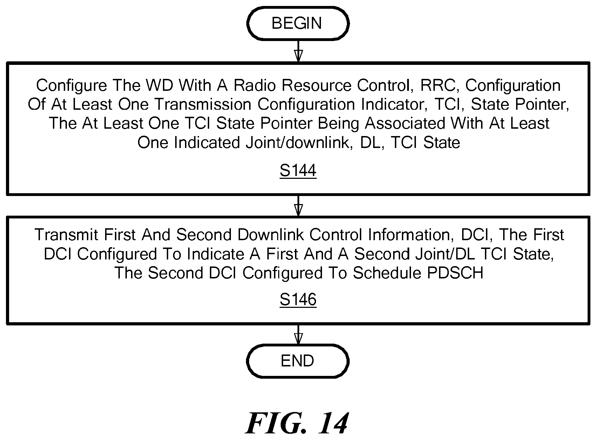

FIG. 14 is a flowchart of an example process in a network node 16 for explicit unified transmission configuration indicator (TCI) state index configuration for downlink (DL) transmissions. One or more blocks described herein may be performed by one or more elements of network node 16 such as by one or more of processing circuitry 68 (including the configuration unit 32), processor 70, radio interface 62 and/or communication interface 60. Network node 16 such as via processing circuitry 68 and/or processor 70 and/or radio interface 62 and/or communication interface 60 is configured to configure the WD with a radio resource control, RRC, configuration of at least one transmission configuration indicator, TCI, state pointer, the at least one TCI state pointer being associated with at least one joint/downlink, DL, TCI state (Block S144). The process also includes transmitting first and second downlink control information. DCI, the first DCI configured to indicate a first and a second joint/DL TCI state, the second DCI configured to schedule PDSCH (Block S146).

In some embodiments, the at least one TCI state pointer points to the first joint/DL TCI state to configure the WD 22 to receive the at least one PDSCH reception using a spatial filter determined based at least in part on the first joint/DL TCI state. In some embodiments, the at least one TCI state pointer points to a second joint/DL TCI state to configure the WD 22 to receive the at least one PDSCH reception using a spatial filter determined based at least in part on the second joint/DL TCI state. In some embodiments, the at least one TCI state pointer points to the first and the second joint/DL TCI state to configure the WD 22 to receive the at least one PDSCH reception using a first spatial filter determined based at least in part on the first TCI state and a second spatial filter determined based at least in part on the second joint/DL TCI state. In some embodiments, the at least one TCI state pointer points to the first and the second joint/DL TCI state to configure the WD 22 to receive a first PDSCH reception using a first spatial filter determined based at least in part on the first joint/DL TCI state and configure the WD 22 to receive a second PDSCH reception using a second spatial filter determined based at least in part on the second joint/DL TCI state. In some embodiments, the at least one TCI state pointer consist of a list of logical entries, and where each entry of the list of logical entries indicates one of the two joint/DL TCI states. In some embodiments, the list of logical entries of the at least one TCI state pointer contains a single entry pointing to a first joint/DL TCI state. In some embodiments, the list of logical entries of the at least one TCI state pointer contains a single entry pointing to the second joint/DL TCI state. In some embodiments, the list of logical entries of the at least one TCI state pointer contains two entries, where a first entry points to the first joint/DL TCI state, and a second entry points to the second joint/DL TCI state. In some embodiments, the method includes configuring at least one of two TCI state pointers for each of at least one control resource set, CORESET, to indicate at least one joint/DL TCI state to be used for PDSCH reception in the CORESET. In some embodiments, the method includes configuring a time gap of Y symbols between transmission of the first DCI and transmission of a corresponding PDSCH, Y being based at least in part on WD 22 capabilities. In some embodiments, the method includes configuring a codepoint in a TCI field in the second DCI to change an order of association between a TCI state pointer and at least one PDSCH transmission occasion.

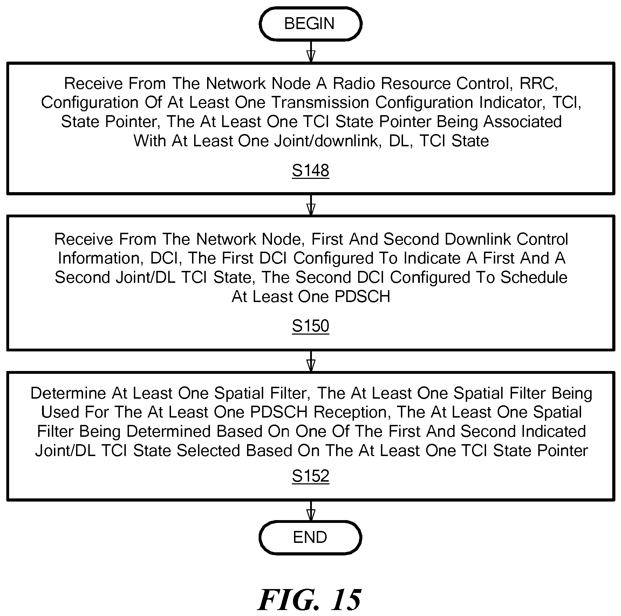

FIG. 15 is a flowchart of an example process in a wireless device 22 according to some embodiments of the present disclosure. One or more blocks described herein may be performed by one or more elements of wireless device 22 such as by one or more of processing circuitry 84 (including the spatial filter unit 34), processor 86, radio interface 82 and/or communication interface 60. Wireless device 22 such as via processing circuitry 84 and/or processor 86 and/or radio interface 82 is configured to receive from the network node 16 a radio resource control, RRC, configuration of at least one transmission configuration indicator, TCI, state pointer, the at least one TCI state pointer being associated with at least one joint/downlink (DL) TCI state (Block S148). The process includes receiving from the network node 16, first and second downlink control information, DCI, the first DCI configured to indicate a first and a second joint/DL TCI state, the second DCI configured to schedule at least one PDSCH (Block S150). The process also includes determining at least one spatial filter, the at least one spatial filter being used for the at least one PDSCH reception, wherein the at least one spatial filter is determined based at least in part on one of the first and second joint/DL TCI state selected based at least in part on the at least one TCI state pointer (Block S152).

In some embodiments, the at least one TCI state pointer points to the first joint/DL TCI state and the method includes receiving the at least one PDSCH reception using a spatial filter determined based at least in part on the first joint/DL TCI state. In some embodiments, the at least one TCI state pointer points to a second joint/DL TCI state and the method includes receiving the at least one PDSCH reception using a spatial filter determined based at least in part on the second joint/DL TCI state. In some embodiments, the at least one TCI state pointer points to the first and the second joint/DL TCI state and the method includes receiving the at least one PDSCH reception using a first spatial filter determined based at least in part on the first TCI state and a second spatial filter determined based at least in part on the second joint/DL TCI state. In some embodiments, the at least one TCI state pointer points to the first and the second joint/DL TCI state and the method includes receiving a first PDSCH reception using a first spatial filter determined based at least in part on the first joint/DL TCI state and receiving a second PDSCH reception using a second spatial filter determined based at least in part on the second joint/DL TCI state. In some embodiments, the at least one TCI state pointer consist of a list of logical entries, and where each entry of the list of logical entries indicates one of the two joint/DL TCI states, In some embodiments, the list of logical entries of the at least one TCI state pointer contains a single entry pointing to a first joint/DL TCI state. In some embodiments, the list of logical entries of the at least one TCI state pointer contains a single entry pointing to the second joint/DL TCI state. In some embodiments, the list of logical entries of the at least one TCI state pointer contains two entries, where a first entry points to the first joint/DL TCI state, and a second entry points to the second joint/DL TCI state.

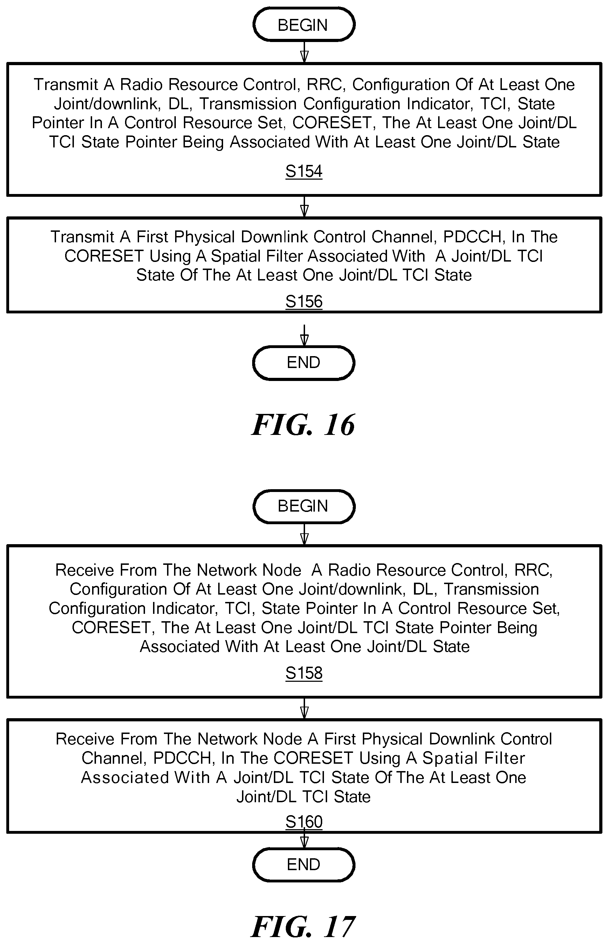

FIG. 16 is a flowchart of an example process in a network node 16 for explicit unified transmission configuration indicator (TCI) state index configuration for downlink (DL) transmissions. One or more blocks described herein may be performed by one or more elements of network node 16 such as by one or more of processing circuitry 68 (including the configuration unit 32), processor 70, radio interface 62 and/or communication interface 60. Network node 16 such as via processing circuitry 68 and/or processor 70 and/or radio interface 62 and/or communication interface 60 is configured to transmit a radio resource control, RRC, configuration of at least one joint/downlink, DL, transmission configuration indicator, TCI, state pointer in a control resource set, CORESET, the at least one joint/DL TCI state pointer being associated with at least one joint/DL TCI state (Block S154). The process includes transmitting a first physical downlink control channel, PDCCH, in the CORESET using a spatial filter associated with a joint/DL TCI state of the at least one joint/DL TCI state (Block S156).

In some embodiments, the method also includes transmitting a medium access control, MAC, control element, CE, to activate at least one joint/DL TCI state of the at least one joint/DL TCI state and to transmit a first downlink control information, DCI, indicating at least one of the at least one activated joint/DL TCI state. In some embodiments, the at least one TCI state pointer points to a first indicated joint/DL TCI state of the at least one joint/DL TCI state and the method includes configuring the WD 22 to receive first PDCCH using a spatial filter determined based at least in part on the first joint/DL TCI state. In some embodiments, the at least one TCI state pointer points to a first and a second joint/DL TCI state of the at least one joint/DL TCI state and the method includes configuring the WD 22 to receive the first PDCCH using a first spatial filter determined based at least in part on the first TCI state and a second spatial filter determined based at least in part on the second joint/DL TCI state. In some embodiments, the at least one TCI state pointer points to a first and a second joint/DL TCI state of the at least one joint/DL TCI state to configure the WD 22 to receive the first PDCCH using a first spatial filter determined based at least in part on the first joint/DL TCI state and to configure the WD 22 to receive a second PDCCH using a second spatial filter determined based at least in part on the second joint/DL TCI state. In some embodiments, the at least one TCI state pointer consist of a list of logical entries, and where each entry of the list of logical entries indicates one of a plurality of joint/DL TCI states of the at least one joint/DL TCI state. In some embodiments, the list of logical entries of the at least one TCI state pointer contains a single entry pointing to a first joint/DL TCI state of the at least one joint/DL TCI state. In some embodiments, the list of logical entries of the at least one TCI state pointer contains a single entry pointing to a second joint/DL TCI state of the at least one joint/DL TCI state. In some embodiments, the list of logical entries of the at least one TCI state pointer contains two entries, where a first entry points at a first joint/DL TCI state of the at least one joint/DL TCI state, and a second entry points to a second joint/DL TCI state of the at least one joint/DL TCI state.

FIG. 17 is a flowchart of an example process in a wireless device 22 according to some embodiments of the present disclosure. One or more blocks described herein may be performed by one or more elements of wireless device 22 such as by one or more of processing circuitry 84 (including the spatial filter unit 34), processor 86, radio interface 82 and/or communication interface 60. Wireless device 22 such as via processing circuitry 84 and/or processor 86 and/or radio interface 82 is configured to receive from the network node 16 a radio resource control, RRC, configuration of at least one joint/downlink, DL, transmission configuration indicator, TCI, state pointer in a control resource set, CORESET, the at least one joint/DL TCI state pointer being associated with at least one joint/DL TCI state (Block S158). The process also includes receiving from the network node 16 a first physical downlink control channel, PDCCH, in the CORESET using a spatial filter associated with a joint/DL TCI state of the at least one j oint/DL TCI state. (Block S160).

In some embodiments, the method includes receiving from the network node 16 a medium access control, MAC, control element, CE, to activate at least one joint/DL TCI state of the at least one joint/DL TCI state and to receive a first downlink control information, DCI, indicating at least one of the at least one activated joint/DL TCI state. In some embodiments, the at least one TCI state pointer points to a first joint/DL TCI state of the at least one joint/DL TCI state and the method includes receiving the first PDCCH using a spatial filter determined based at least in part on the first joint/DL TCI state. In some embodiments, the at least one TCI state pointer points to a first and a second joint/DL TCI state of the at least one joint/DL TCI state and the method includes receiving the first PDCCH using a first spatial filter determined based at least in part on the first TCI state and a second spatial filter determined based at least in part on the second joint/DL TCI state. In some embodiments, the at least one TCI state pointer points to a first and a second joint/DL TCI state of the at least one j oint/DL TCI state to configure the WD 22 to receive the first PDCCH using a first spatial filter determined based at least in part on the first joint/DL TCI state and configure the WD 22 to receive a second PDCCH using a second spatial filter determined based at least in part on the second joint/DL TCI state. In some embodiments, the at least one TCI state pointer consist of a list of logical entries, and where each entry of the list of logical entries indicates one of a plurality of joint/DL TCI states of the at least one joint/DL TCI state. In some embodiments, the list of logical entries of the at least one TCI state pointer contains a single entry pointing to a first joint/DL TCI state of the at least one joint/DL TCI state. In some embodiments, the list of logical entries of the at least one TCI state pointer contains a single entry pointing to a second joint/DL TCI state of the at least one joint/DL TCI state. In some embodiments, the list of logical entries of the at least one TCI state pointer contains two entries, and wherein a first entry points at a first joint/DL TCI state of the at least one joint/DL TCI state, and a second entry points to a second joint/DL TCI state of the at least one joint/DL TCI state.

Having described the general process flow of arrangements of the disclosure and having provided examples of hardware and software arrangements for implementing the processes and functions of the disclosure, the sections below provide details and examples of arrangements for explicit unified transmission configuration indicator (TCI) state index configuration for downlink (DL) transmissions.

For mTRP DL transmissions with unified TCI states, more than one unified TCI state may be indicated/activated using a combination of RRC signaling, MAC CE signaling and DCI indication comprising one or more of the following steps:

- Step 1: A WD 22 is RRC configured with a list of unified TCI states, each associated with a beam or spatial filter, where $N_{max,TCI}$ is the maximum number of unified TCI states may be configured:

TCI state 0

TCI state 1

...

TCI state $N_{max,TCI} - 1$

- Step 2: MAC CE activates multiple TCI states out of the list of unified TCI states for each TCI codepoint in DCI, where M is the number of TCI codepoints, $L_i$ is the number of activated TCI states for the ith TCI codepoint, and $k_{i,j} \in \{0, 1, ... , N_{max,TCI} - 1\}$:

$$\{\text{TCI state } k_{0,1}, \text{ TCI state } k_{0,2}, ..., \text{ TCI state } k_{0,L_0}, \} \text{ for TCI codepoint } 0$$

$$\{\text{TCI state } k_{1,1}, \text{ TCI state } k_{1,2}, ..., \text{ TCI state } k_{1,L_1}, \} \text{ for TCI codepoint } 1$$

...

$$\{ \text{TCI state } k_{M-1,1}, \text{ TCI state } k_{M-1,2}, ..., \text{ TCI state } k_{M-1,L_{M-1}} \} \text{ for TCI codepoint M-1};$$

- Step 3: One of the TCI codepoints is signaled to the WD 22 via DCI. The corresponding TCI states are to be used for subsequent DL transmissions; and/or
- Step 4: WD 22 sends a HARQ-ACK to acknowledge the reception of the DCI. After a certain time period (e.g., Y symbols) , the TCI states associated with the TCI codepoint are assumed for certain DL channels or signals.

Steps 3 & 4 above may be repeated by signaling a different TCI codepoint if a new set of activated TCI states is needed due to, for example, WD 22 movement. Steps 2, 3 & 4 may be repeated if new TCI states need to be activated.

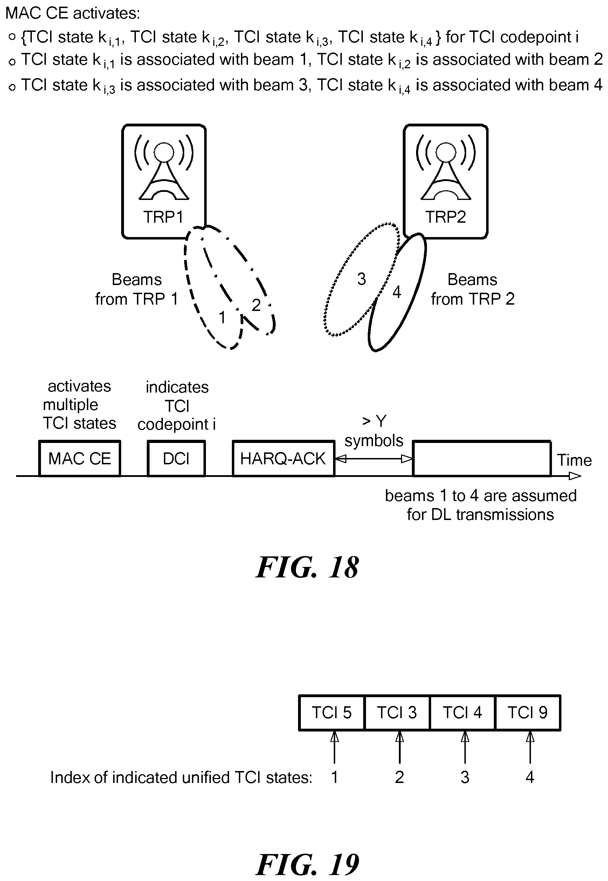

An example is illustrated FIG. 18 which shows that 4 unified TCI states are activated by MAC CE for a TCI codepoint, in which each of the 4 TCI states is associated with a beam from one of two TRPs.

Here, it is assumed that a list of unified TCI states are activated by MAC CE for each TCI codepoint in DCI. An unified TCI state in the list may be referred by its position in the list. One example is provided in FIG. 19, where four unified TCI states are activated for a TCI codepoint that is indicated in DCI and the first unified TCI state is TCI state 5, the second unified TCI state is TCI state 3, and so on.

In some embodiments, different TCI states in the list may be used for different channels or signals. For example, the PDCCH may be transmitted with wider beams while PDSCH may be transmitted with narrower beams. Therefore, a subset of TCI states in the list may be used for PDSCH transmission. For example in FIG. 18, only TCI states associated with beams 2 and 4 may be used to PDSCH transmission while TCI states associated with beams 1 and 3 in FIG. 18 may be used for PDCCH transmission.

In some other embodiments, the same set of unified TCI states may be used for different channels or signals.

Configuring TCI state pointers

In one embodiment, a list of TCI state pointers may be explicitly configured in PDSCH-Config (as specified in 3GPP TS 38.331 e.g. V16.7.0 (2021-12)). Each TCI state pointer points to one of the TCI states that have been activated. In one embodiment, instead of configuring the list of TCI state pointers in PDSCH-Config, it may be configured in one of PDSCH-ConfigCommon or PDSCH-ServingCellConfig.

In some embodiments, the WD 22 uses the indicated/activated TCI states corresponding to the configured TCI state pointers for the PDSCH reception. For example, if the list of TCI state pointers are [1,3], the WD 22 uses the first and third indicated/activated TCI states for PDSCH reception.

```
-- ASN1START

-- TAG-PDSCH-CONFIG-START

PDSCH-Config ::=                SEQUENCE {

[[

TCI-State-Pointer-List  SEQUENCE (SIZE(1.. maxNrofTCI-State-Pointers)) OF

    TCI-State-Pointer  }

TCI-State-Pointer ::=          INTEGER (1..maxNrofIndicated-TCI-States)

]]

-- TAG-PDSCH-CONFIG-STOP

-- ASN1STOP
```

In another embodiment, a TCI-State-Pointer may only be configured in one PDSCH-Config corresponding to a given DL dedicated bandwidth part (BWP) and a serving cell (i.e., a component carrier). This DL dedicated BWP and serving cell may be referred to as the reference PDSCH-Config. For the other PDSCH-Config's that should follow the same TCI-State-Pointer as configured in the reference PDSCH-Config, at least one identifier may be configured in the other PDSCH-Config's. Consider the following example:

- PDSCH-Config 0 in BWP 0 of Serving cell 1 is configured with a TCI-State-Pointer (and optionally a second pointer TCI-State-Pointer2); and/or
- PDSCH-Config 1 in BWP 1 of Serving cell 2 is not configured with a TCI-State-Pointer but configured with the identifiers of the reference PDSCH-Config which includes IDs corresponding to BWP 0 and/or Serving cell 1.

In the above example embodiment, if the TCI-State-Pointer is configured with value1 (and TCI-State-Pointer2 not configured) in PDSCH-Config 0 and the WD 22 is indicated with two unified TCI states, then for PDSCH reception corresponding to PDSCH-Config 1, the WD 22 may determine the spatial filter for the PDSCH reception based on a first indicated unified TCI state (i.e., the same assumption as the reference PDSCH-Config).

Similarly, if the TCI-State-Pointer is configured with value2 (and TCI-State-Pointer2 not configured) in PDSCH-Config 0 and the WD 22 is indicated with two unified TCI states, then for PDSCH reception corresponding to PDSCH-Config 1, the WD 22 may determine the spatial filter for the PDSCH reception based on a second indicated unified TCI state (i.e., the same assumption as the reference PDSCH-Config).

If two TCI-State-Pointer's (TCI-State-Pointer and TCI-State-Pointer2) are configured with value1 and value2 respectively in PDSCH-Config 0 and the WD 22 is indicated with two unified TCI states, then for PDSCH reception corresponding to PDSCH-Config 1, the WD 22 may determine the spatial filter for a first PDSCH reception based on a first indicated unified TCI state and a second PDSCH reception based on a second indicated unified TCI state (i.e., the same assumption as the reference PDSCH-Config).

A benefit of the above embodiment is that when the TCI-State-Pointer (and TCI-State-Pointer 2) needs to be updated, it is sufficient that the TCI-State-Pointer (and TCI-State-Pointer 2) in the reference PDSCH-Config is updated via reconfiguration. No such update/reconfiguration is needed for the non-reference PDSCH-Config's (i.e., PDSCH-Config's that follow the same TCI-State-Pointer (and TCI-State-Pointer 2) assumption as the reference PDSCH-Config).

A configuration example of the reference PDSCH-Config is shown below. In this example, the parameter 'refTCIstatePointer' provides the reference PDSCH-Config (i.e., the serving cell and the BWP ID corresponding to the PDSCH-Config that contains the configured TCI-State-Pointer (and TCI-State-Pointer 2)). Note that in this example, if a PDSCH-Config is configured with TCI-State-Pointer (and TCI-State-Pointer 2), then 'refTCIstatePointer' is not configured for that PDSCH-Config (i.e., that PDSCH-Config will be reference PDSCH-Config for other PDSCH-Config's). For a non-reference PDSCH-Config, only 'refTCIstatePointer' will be configured, and TCI-State-Pointer (and TCI-State-Pointer 2) will not be configured).

```
-- ASN1START
-- TAG-PDSCH-CONFIG-START
PDSCH-Config ::=              SEQUENCE {
[[
TCI-State-Pointer-List  SEQUENCE (SIZE(1.. maxNrofTCI-State-Pointers)) OF
     TCI-State-Pointer
TCI-State-Pointer ::=              INTEGER (1..maxNrofIndicated-TCI-States)
     OPTIONAL -- Need R
TCI-State-Pointer2 ::=              INTEGER (1..maxNrofIndicated-TCI-States)
     OPTIONAL -- Need R
refTCIstatePointer          RefTciStatePointer-rxx
       OPTIONAL -- Need R
]]
RefTciStatePointer-rxx  ::= SEQUENCE {
                  servingcell-rxx       ServCellIndex-rxx
                  bwp-rxx               BWP-Id-rxx
}
-- TAG-PDSCH-CONFIG-STOP
-- ASN1STOP
```

When the WD 22 is configured with the list of TCI state pointers, it may be decided which PDSCH receptions and/or which parts of a PDSCH reception that are associated with each TCI state pointer.

In one embodiment, when the WD 22 is configured with PDSCH aggregation, i.e., when the PDSCH data is repeated across multiple transmission occasions, each PDSCH transmission occasion is associated with one of the TCI state pointers.

In one embodiment, in case PDSCH is scheduled for TDM or FDM repetition (i.e. where the same payload is transmitted in multiple time instances or frequency allocations, respectively), each PDSCH repetition is associated with one of the TCI state pointers according to a pre-defined mapping pattern. For example, the first PDSCH transmission occasion is associated with the first TCI state pointer and the second PDSCH transmission occasion is associated with the second TCI state pointer, and so on. If there are more PDSCH transmission occasions than the number of TCI state pointers, the mapping may continue starting from the first TCI state pointer to the next PDSCH transmission occasion and so on until all PDSCH transmission occasions are mapped. In one embodiment, a codepoint in TCI field in DCI scheduling the PDSCH may be used to change the order of the association between the TCI state pointer and the PDSCH transmission occasions. For example, the mapping may start from the second TCI state pointer by mapping the second TCI state pointer to the first PDSCH transmission occasion, and then by mapping the first TCI state pointer to the second PDSCH transmission occasion.

In one embodiment, in cases where the PDSCH is scheduled for spatial multiplexing (i.e. where different layers are transmitted in overlapping resource elements), different sets of layers of the PDSCH are associated with different TCI state pointers.

In one embodiment, a first set of layers of the PDSCH, associated with a first CDM group indicated with the antenna port bit field (as specified in 3GPP TS 38.212) included in the DCI scheduling the PDSCH reception is associated with the first TCI state pointer. And a second set of layers of the triggered PDSCH, associated with a second CDM group indicated with the antenna port bitfield included in the DCI scheduling the PDSCH reception is associated with the second TCI state pointer. So for example, in case the antenna port bitfield in DCI scheduling the PDSCH indicates antenna (DMRS) port 0 belonging to CDM group 0 and antenna (DMRS) port 2 belonging to CDM group 1, then the WD 22 may associate the PDSCH layer transmitted on antenna port 0 with a first TCI state pointer (i.e. a first indicated unified TCI

17

state), and associate the PDSCH layer transmitted on antenna port 2 with a second TCI state pointer (i.e. a second indicated unified TCI state). This embodiment may be extended to more than 2 CDM groups. For example, in case the antenna port bitfield in DCI scheduling the PDSCH indicates antenna (DMRS) ports belonging to more than 3 CDM groups, then the WD 22 may associate the PDSCH layer transmitted on antenna port(s) belonging to a subset of the 3 CDM groups with a first TCI state pointer (i.e. a first indicated unified TCI state), and may associate the PDSCH layer transmitted on antenna port(s) belonging to the remaining CDM groups (excluding the subset of the CDM groups) with a second TCI state pointer (i.e. a second indicated unified TCI state).

In another embodiment, if a single unified TCI state is indicated in DCI scheduling a PDSCH, the WD 22 may ignore the configured TCI state pointers and use the single unified TCI state for the PDSCH reception. The single unified TCI state may or may not be one of the TCI states associated with the TCI state pointers.

In a further embodiment, one or two TCI state pointers may also be explicitly configured for each CORESET to indicate the unified TCI state(s) to be used for PDCCH reception in the CORESET. Under the unified TCI state framework, the activated or indicated joint/DL or unified TCI states can also be used for PDCCH. There may be no need to configure a list of TCI states by RRC and use MAC CE to activate one or two TCI state(s) for a CORESET as it is done in NR 3GPP Rel-15/16. An example is shown below, where the parameters "TCI-State-Pointer-List " and "TCI-State-Pointer" together select one or two of the activated/indicated unified TCI states for a CORESET.

For example, if maxNrofIndicated-TCI-States =2, i.e., with two indicated DL/joint TCI states, the value of TCI-State-Pointer may be either 1 or 2.

If TCI-State-Pointer-List = 1, (i.e., size(1)), then the 1st indicated TCI state may be used for receiving PDCCH in the CORESET.

If TCI-State-Pointer-List = 2, (i.e., size(1)), then the 2nd indicated TCI state may be used for receiving PDCCH in the CORESET.

If TCI-State-Pointer-List = ( 1, 2) (i.e., size(2)), then both the 1st and 2nd indicated TCI states may be used for receiving PDCCH in the CORESET.

If TCI-State-Pointer-List is not configured, none of the indicated TCI states may be used for receiving PDCCH in the CORESET and the mechanism of Rel-15/16 applies.

*ControlResourceSet* **information element**

```
-- ASN1START
-- TAG-CONTROLRESOURCESET-START
ControlResourceSet ::=        SEQUENCE {
    controlResourceSetId          ,
```

```
frequencyDomainResources        BIT STRING (SIZE (45)),
duration                        INTEGER (1..maxCoReSetDuration),
cce-REG-MappingType             CHOICE {
    interleaved                 SEQUENCE {
        reg-BundleSize              ENUMERATED {n2, n3, n6},
        interleaverSize             ENUMERATED {n2, n3, n6},
        shiftIndex                  INTEGER(0..maxNrofPhysicalResourceBlocks-
1)      OPTIONAL -- Need S
    },
    nonInterleaved              NULL
},
precoderGranularity             ENUMERATED {sameAsREG-bundle,
allContiguousRBs},
tci-StatesPDCCH-ToAddList        SEQUENCE(SIZE (1..maxNrofTCI-
StatesPDCCH)) OF TCI-StateId OPTIONAL, -- Cond NotSIB1-initialBWP
tci-StatesPDCCH-ToReleaseList    SEQUENCE(SIZE (1..maxNrofTCI-
StatesPDCCH)) OF TCI-StateId OPTIONAL, -- Cond NotSIB1-initialBWP
tci-PresentInDCI                ENUMERATED {enabled}
OPTIONAL, -- Need S
TCI-State-Pointer-List              SEQUENCE (SIZE(1..2)) OF TCI-State-
Pointer
pdcch-DMRS-ScramblingID             INTEGER (0..65535)
OPTIONAL, -- Need S
...,
[[
rb-Offset-r16           INTEGER (0..5)
OPTIONAL, -- Need S
tci-PresentDCI-1-2-r16          INTEGER (1..3)
OPTIONAL, -- Need S
coresetPoolIndex-r16            INTEGER (0..1)
OPTIONAL, -- Need S
controlResourceSetId-v1610                          OPTIONAL  -- Need S
]]
}
```

44

TCI-State-Pointer ::=                    INTEGER (1..maxNrofIndicated-TCI-States)

-- TAG-CONTROLRESOURCESET-STOP

-- ASN1STOP

In one embodiment, a flag parameter may be configured as part of PDSCH-Config along with multi-TRP PDSCH configuration parameters. This flag parameter enables the use of the unified TCI state to be used for multi-TRP PUSCH schemes. If the flag parameter is not configured, then the WD 22 may assume the 3GPP Rel-15/16 based TCI state framework for mTRP PDSCH reception. For instance, if the flag parameter is configured, then the WD 22 is instructed to assume unified TCI state for deriving spatial filters for receiving multi-TRP PDSCH schemes. If the flag is not configured, the WD 22 is instructed to use the 3GPP Rel-15 based TCI state as indicated by the TCI field in DCI that schedules the PDSCH transmission to derive the spatial filter for receiving multi-TRP PDSCH schemes.

Some embodiments may include one or more of the following:
A method in a WD 22 for determining spatial filter for PDSCH reception using the Unified TCI state framework for mTRP operation includes (a) receiving (RRC) configuration from the network of one or more TCI state pointers, where a first TCI state pointer is associated with a first indicated Joint/DL TCI state and a second TCI state pointer is associated with a second indicated Joint/DL TCI state; (b) receiving a first DCI that activates/indicates a pair of unified TCI states; (c) receiving a second DCI that schedules a first PDSCH reception and a second PDSCH reception, and where a first spatial filter is determined for the first PDSCH reception based on a first activated/indicated unified TCI state associated with a first explicitly configured TCI state pointer, and a second spatial filter is determined for the second PDSCH reception based on a second activated/indicated unified TCI state associated with a second explicitly configured TCI state pointer.

The explicit configuration (in the above step(a) may be done in PDSCH-Config. In the method with the explicit configuration, a determining a first spatial filter for a first PDSCH reception may be partly based on a codepoint of a DCI bitfield in the DCI used to trigger the PDSCH.

In the method with the explicit configuration, a determining a second spatial filter for a second PDSCH reception may be partly based on a codepoint of a DCI bitfield in the DCI used to trigger the PDSCH. In the method with the explicit configuration a determining a first spatial filter for a first PDSCH reception may be partly based on a CDM group number of the antenna (DMRS) ports indicated in the DCI used to trigger the PDSCH. In the method with the explicit configuration, a determining a second spatial filter for a second PDSCH reception may be partly based on a CDM group number of the antenna (DMRS) ports indicated in the DCI used to trigger the PDSCH. In the method, there may be a time gap larger than Y symbols, between reception of first DCI and reception of PDSCH.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that may be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that may direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments may be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims. The invention is defined by the appended claims.

**Claims**

1.  A network node (16) configured to communicate with a wireless device, WD (22), the network node (16) configured to:

    configure the WD (22) with a radio resource control, RRC, configuration of at least one transmission configuration indicator, TCI, state pointer, the TCI state pointer being associated with at least one joint/downlink, DL, TCI state; and
    transmit first and second downlink control information, DCI, the first DCI configured to indicate a first joint/DL TCI state and a second joint/DL TCI state, the second DCI configured to schedule PDSCH,
    wherein, if the at least one TCI state pointer points to the first joint/DL TCI state, the WD (22) is caused to receive the at least one PDSCH using a spatial filter determined based at least in part on the first joint/DL TCI state, if the at least one TCI state pointer points to a second joint/DL TCI state, the WD (22) is caused to receive the at least one PDSCH using a spatial filter determined based at least in part on the second joint/DL TCI state, and if the at least one TCI state pointer points to the first joint/DL TCI state and the second joint/DL TCI state, the WD (22) is caused to receive the at least one PDSCH using a first spatial filter determined based at least in part on the first joint/DL TCI state and a second spatial filter determined based at least in part on the second joint/DL TCI state.

2.  The network node (16) of Claim 1, configured to perform a method according to any one of claims 4 to 7

3.  A method performed by a network node (16) configured to communicate with a wireless device, WD (22), the method comprising:

    configuring (S144) the WD (22) with a radio resource control, RRC, configuration of at least one transmission configuration indicator, TCI, state pointer, the at least one TCI state pointer being associated with at least one joint/downlink, DL, TCI state; and
    transmitting (S146) first and second downlink control information. DCI, the first DCI configured to indicate a first and a second joint/DL TCI state, the second DCI configured to schedule PDSCH,
    wherein, if the at least one TCI state pointer points to the first joint/DL TCI state, the WD (22) is caused to receive the at least one PDSCH using a spatial filter determined based at least in part on the first joint/DL TCI state, if the at least one TCI state pointer points to a second joint/DL TCI state, the WD (22) is caused to receive the at least one PDSCH using a spatial filter determined based at least in part on the second joint/DL TCI state, and if the at least one TCI state pointer points to the first and the second joint/DL TCI state, the WD (22) is caused to receive the at least one PDSCH using a first spatial filter determined based at least in part on the first joint/DL TCI state and a second spatial filter determined based at least in part on the second joint/DL TCI state.

4. The method of Claim 3, wherein the at least one TCI state pointer consist of a list of logical entries, and wherein each entry of the list of logical entries indicates one of the two joint/DL TCI states.

5. The method of Claim 4, wherein the list of logical entries of the at least one TCI state pointer contains a single entry pointing to the first joint/DL TCI state or to the second joint/DL TCI state.

6. The method of Claim 4, wherein the list of logical entries of the at least one TCI state pointer contains two entries, and wherein a first entry points to the first joint/DL TCI state, and a second entry points to the second joint/DL TCI state.

7. The method of any of Claims 3-6, further comprising at least one of:

- configuring at least one of two TCI state pointers for each of at least one control resource set, CORESET, to indicate at least one joint/DL TCI state to be used for PDCCH in the CORESET,
- configuring a time gap of Y symbols between transmission of the first DCI and transmission of a corresponding PDSCH, Y being based at least in part on WD (22) capabilities, and
- configuring a codepoint in a TCI field in the second DCI to change an order of association between a TCI state pointer of the at least one TCI state pointer and at least one PDSCH transmission occasion.

8. A wireless device, WD (22), configured to communicate with a network node (16), the WD (22) configured to:

receive from the network node (16) a radio resource control, RRC, configuration of at least one transmission configuration indicator, TCI, state pointer, the at least one TCI state pointer being associated with at least one joint/downlink, DL, TCI state;
receive from the network node (16), first and second downlink control information, DCI, the first DCI configured to indicate a first joint/DL TCI state and a second joint/DL TCI state, the second DCI configured to schedule at least one PDSCH; and
determine at least one spatial filter, the at least one spatial filter being used for the at least one PDSCH, the at least one spatial filter being determined based at least in part on one of the first joint/DL TCI state and the second joint/DL TCI state selected based at least in part on the at least one TCI state pointer,
wherein, if the at least one TCI state pointer points to the first joint/DL TCI state, the WD (22) is configured to receive the at least one PDSCH using a spatial filter determined based at least in part on the first joint/DL TCI state, and if the at least one TCI state pointer points to the second joint/DL TCI state, the WD (22) is configured to receive the at least one PDSCH using a spatial filter determined based at least in part on the second joint/DL TCI state, and if the at least one TCI state pointer points to the first joint/DL TCI state and the second joint/DL TCI state, the WD (22) is configured to receive the at least one PDSCH using a first spatial filter determined based at least in part on the first joint/DL TCI state and a second spatial filter determined based at least in part on the second joint/DL TCI state.

9. The WD (22) of Claim 8, configured to perform a method according to any one of claims 11 to 13.

10. A method performed by a wireless device, WD (22), configured to communicate with a network node (16), the method comprising:

receiving (S148) from the network node (16) a radio resource control, RRC, configuration of at least one transmission configuration indicator, TCI, state pointer, the at least one TCI state pointer being associated with at least one joint/downlink, DL, TCI state;
receiving (S150) from the network node (16), first and second downlink control information, DCI, the first DCI configured to indicate a first joint/DL TCI state and a second joint/DL TCI state, the second DCI configured to schedule at least one PDSCH; and
determining (S152) at least one spatial filter, the at least one spatial filter being used for the at least one PDSCH, the at least one spatial filter being determined based at least in part on one of the first joint/DL TCI state and the second joint/DL TCI state selected based at least in part on the at least one TCI state pointer,
wherein, if the at least one TCI state pointer points to the first joint/DL TCI state, the WD (22) receives the at least one PDSCH using a spatial filter determined based at least in part on the first joint/DL TCI state, if the at least one TCI state pointer points to the second joint/DL TCI state, the WD (22) receives the at least one PDSCH using a spatial filter determined based at least in part on the second joint/DL TCI state, and if the at least one TCI state pointer points to the first joint/DL TCI state and the second joint/DL TCI state, WD (22) receives the at least one PDSCH using a first spatial filter determined based at least in part on the first joint/DL TCI state and a second spatial filter determined based at least in part on the second joint/DL TCI state.

11. The method of Claim 10, wherein the at least one TCI state pointer consist of a list of logical entries, and wherein each entry of the list of logical entries indicates one of the two joint/DL TCI states.

12. The method of Claim 11, wherein the list of logical entries of the at least one TCI state pointer contains a single entry pointing to the first joint/DL TCI state or to the second joint/DL TCI state.

13. The method of Claim 10, wherein the list of logical entries of the at least one TCI state pointer contains two entries, wherein a first entry points to the first joint/DL TCI state, and a second entry points to the second joint/DL TCI state.

14. A method performed by a network node (16) configured to communicate with a wireless device, WD (22), the method comprising:

transmitting (S154) a radio resource control, RRC, configuration of at least one joint/downlink, DL, transmission configuration indicator, TCI, state pointer in a control resource set, CORESET, the at least one joint/DL TCI state pointer being associated with at least one joint/DL TCI state;
transmitting (S156) a first physical downlink control channel, PDCCH, in the CORESET using a spatial filter associated with a joint/DL TCI state of the at least one joint/DL TCI state; and
transmitting a medium access control, MAC, control element, CE, to activate at least one joint/DL TCI state of the at least one joint/DL TCI state; and
transmitting a first downlink control information, DCI, indicating at least one of the at least one activated joint/DL TCI state,
wherein, if the at least one TCI state pointer points to a first indicated joint/DL TCI state of the at least one joint/DL TCI state, the WD (22) is caused to receive the first PDCCH using a spatial filter determined based at least in part on the first joint/DL TCI state, if the at least one TCI state pointer points to a second indicated joint/DL TCI state of the at least one joint/DL TCI state, the WD (22) is caused to receive the first PDCCH using a spatial filter determined based at least in part on the second joint/DL TCI state, and if the at least one TCI state pointer points to a first indicated joint/DL TCI state and a second indicated joint/DL TCI state of the at least one joint/DL state, the WD (22) is caused to receive the first PDCCH using a first spatial filter determined based at least in part on the first joint/DL TCI state and a second spatial filter determined based at least in part on the second joint/DL TCI state.

15. The method of Claim 14, wherein the at least one TCI state pointer consists of a list of logical entries, and wherein each entry of the list of logical entries indicates one of a plurality of joint/DL TCI states of the at least one joint/DL TCI state.

16. The method of Claim 15, wherein the list of logical entries of the at least one TCI state pointer contains a single entry pointing to the first joint/DL TCI state of the at least one joint/DL TCI state or to the second joint/DL TCI state of the at least one joint/DL TCI state.

17. The method of Claim 15, wherein the list of logical entries of the at least one TCI state pointer contains two entries, wherein a first entry points to the first joint/DL TCI state of the at least one joint/DL TCI state, and a second entry points to the second joint/DL TCI state of the at least one joint/DL TCI state.

18. A network node (16) configured to communicate with a wireless device, WD (22), the network node (16) configured to:

transmit a radio resource control, RRC, configuration of at least one joint/downlink, DL, transmission configuration indicator, TCI, state pointer in a control resource set, CORESET, the at least one joint/DL TCI state pointer being associated with at least one joint/DL TCI state;
transmit a first physical downlink control channel, PDCCH, in the CORESET using a spatial filter associated with a joint/DL TCI state of the at least one joint/DL TCI state; and
transmit a medium access control, MAC, control element, CE, to activate at least one joint/DL TCI state of the at least one joint/DL TCI state; and
transmit a first downlink control information, DCI, indicating at least one of the at least one activated joint/DL TCI state,

wherein, if the at least one TCI state pointer points to a first indicated joint/DL TCI state of the at least one joint/DL TCI state, the WD (22) is caused to receive the first PDCCH using a spatial filter determined based at least in part on the first joint/DL TCI state, if the at least one TCI state pointer points to a second indicated joint/DL TCI state of the at least one joint/DL TCI state, the WD (22) is caused to receive the first PDCCH using a spatial filter determined based at least in part on the second joint/DL TCI state, and if the at least one TCI state pointer points to a first indicated joint/DL TCI state and a second indicated joint/DL TCI state of the at least one joint/DL state, the WD (22) is caused to receive the first PDCCH using a first spatial filter determined based at least in part on the first joint/DL TCI state and a second spatial filter determined based at least in part on the second joint/DL TCI state.

19. A method performed by a wireless device, WD (22), configured to communicate with a network node (16), the method comprising:

receiving (S158) from the network node (16) a radio resource control, RRC, configuration of at least one joint/downlink, DL, transmission configuration indicator, TCI, state pointer in a control resource set, CORESET, the at least one joint/DL TCI state pointer being associated with at least one joint/DL TCI state;

receiving (S160) from the network node (16) a first physical downlink control channel, PDCCH, in the CORESET using a spatial filter associated with a joint/DL TCI state of the at least one joint/DL TCI state; and

receiving from the network node (16) a medium access control, MAC, control element, CE, to activate at least one joint/DL TCI state of the at least one joint/DL TCI state;

receiving a first downlink control information, DCI, indicating at least one of the at least one activated joint/DL TCI state,

wherein, if the at least one TCI state pointer points to a first indicated joint/DL TCI state of the at least one joint/DL TCI state, the WD (22) receives the first PDCCH using a spatial filter determined based at least in part on the first joint/DL TCI state, if the at least one TCI state pointer points to a second indicated joint/DL TCI state of the at least one joint/DL TCI state, the WD (22) receives the first PDCCH using a spatial filter determined based at least in part on the second joint/DL TCI state, and if the at least one TCI state pointer points to a first indicated joint/DL TCI state and a second indicated joint/DL TCI state of the at least one joint/DL TCI state, the WD (22) receives the first PDCCH using a first spatial filter determined based at least in part on the first joint/DL TCI state and a second spatial filter determined based at least in part on the second joint/DL TCI state.

20. The method of Claim 19, wherein the at least one TCI state pointer consist of a list of logical entries, and wherein each entry of the list of logical entries indicates one of a plurality of joint/DL TCI states of the at least one joint/DL TCI state.

21. The method of Claim 20, wherein the list of logical entries of the at least one TCI state pointer contains a single entry pointing to the first joint/DL TCI state of the at least one joint/DL TCI state or to the second joint/DL TCI state of the at least one joint/DL TCI state.

22. The method of Claim 20, wherein the list of logical entries of the at least one TCI state pointer contains two entries, wherein a first entry points at the first joint/DL TCI state of the at least one joint/DL TCI state, and a second entry points to the second joint/DL TCI state of the at least one joint/DL TCI state.

23. A wireless device, WD, (22) configured to communicate with a network node (16), the WD (22) configured to:

receive from the network node (16) a radio resource control, RRC, configuration of at least one joint/downlink, DL, transmission configuration indicator, TCI, state pointer in a control resource set, CORESET, the at least one joint/DL TCI state pointer being associated with at least one joint/DL TCI state;

receive from the network node (16) a first physical downlink control channel, PDCCH, in the CORESET using a spatial filter associated with a joint/DL TCI state of the at least one joint/DL TCI state; and

receive from the network node (16) a medium access control, MAC, control element, CE, to activate at least one joint/DL TCI state of the at least one joint/DL TCI state;

receive a first downlink control information, DCI, indicating at least one of the at least one activated joint/DL TCI state,

wherein, if the at least one TCI state pointer points to a first indicated joint/DL TCI state of the at least one joint/DL TCI state, the WD (22) is configured to receive the first PDCCH using a spatial filter determined based at least in part on the first joint/DL TCI state, if the at least one TCI state pointer points to a second indicated joint/DL TCI state of the at least one joint/DL TCI state, the WD (22) is configured to receive the first PDCCH using a spatial filter determined based at least in part on the second joint/DL TCI state, and if the at least one TCI state pointer points to a first indicated joint/DL TCI state and a second indicated joint/DL TCI state of the at least one joint/DL TCI state, the WD (22) is configured to receive the first PDCCH using a first spatial filter determined based at least in part on the first joint/DL TCI state and a second spatial filter determined based at least in part on the second joint/DL TCI state.

**Patentansprüche**

1. Netzwerkknoten (16), der zum Kommunizieren mit einer drahtlosen Vorrichtung, WD, (22) konfiguriert ist, wobei der Netzwerkknoten (16) Folgendes umfasst:

   Konfigurieren der WD (22) mit einer Funkressourcensteuerungskonfiguration, RRC-Konfiguration, mindestens eines Übertragungskonfigurationsindikator-Zustandszeigers, TCI-Zustandszeigers, wobei der TCI-Zustandszeiger mit mindestens einem gemeinsamen/Downlink-TCI-Zustand, gemeinsamen/DL-TCI-Zustand, assoziiert ist; und
   Übertragen erster und zweiter Downlink-Steuerinformationen, DCI, wobei die ersten DCI zum Angeben eines ersten gemeinsamen/DL-TCI-Zustands und eines zweiten gemeinsamen/DL-TCI-Zustands konfiguriert sind, wobei die zweiten DCI zum Disponieren eines PDSCH konfiguriert sind,
   wobei, falls der mindestens eine TCI-Zustandszeiger auf den ersten gemeinsamen/DL-TCI-Zustand zeigt, die WD (22) veranlasst wird, den mindestens eine PDSCH unter Verwendung eines Raumfilters zu empfangen, das zumindest teilweise basierend auf dem ersten gemeinsamen/DL-TCI-Zustand bestimmt wird, falls der mindestens eine TCI-Zustandszeiger auf einen zweiten gemeinsamen/DL-TCI-Zustand zeigt, die WD (22) veranlasst wird, den mindestens einen PDSCH unter Verwendung eines Raumfilters zu empfangen, das zumindest teilweise basierend auf dem zweiten gemeinsamen/DL-TCI-Zustand bestimmt wird, und, falls der mindestens eine TCI-Zustandszeiger auf den ersten gemeinsamen/DL-TCI-Zustand und den zweiten gemeinsamen/DL-TCI-Zustand zeigt, die WD (22) veranlasst wird, den mindestens einen PDSCH unter Verwendung eines ersten Raumfilters, das zumindest teilweise basierend auf dem ersten gemeinsamen/DL-TCI-Zustand bestimmt wird, und eines zweiten Raumfilters zu empfangen, das zumindest teilweise basierend auf dem zweiten gemeinsamen/DL-TCI-Zustand bestimmt wird.

2. Netzwerkknoten (16) nach Anspruch 1, der zum Durchführen eines Verfahrens nach einem der Ansprüche 4 bis 7 konfiguriert ist.

3. Verfahren, das von einem Netzwerkknoten (16) durchgeführt wird, der zum Kommunizieren mit einer drahtlosen Vorrichtung, WD, (22) konfiguriert ist, wobei das Verfahren Folgendes umfasst:

   Konfigurieren (S144) der WD (22) mit einer Funkressourcensteuerungskonfiguration, RRC-Konfiguration, mindestens eines Übertragungskonfigurationsindikator-Zustandszeigers, TCI-Zustandszeigers, wobei der mindestens eine TCI-Zustandszeiger mit mindestens einem gemeinsamen/Downlink-TCI-Zustand, gemeinsamen/DL-TCI-Zustand, assoziiert ist; und
   Übertragen (S146) erster und zweiter Downlink-Steuerinformationen, DCI, wobei die ersten DCI zum Angeben eines ersten und eines zweiten gemeinsamen/DL-TCI-Zustands konfiguriert sind, wobei die zweiten DCI zum Disponieren eines PDSCH konfiguriert sind,
   wobei, falls der mindestens eine TCI-Zustandszeiger auf den ersten gemeinsamen/DL-TCI-Zustand zeigt, die WD (22) veranlasst wird, den mindestens eine PDSCH unter Verwendung eines Raumfilters zu empfangen, das zumindest teilweise basierend auf dem ersten gemeinsamen/DL-TCI-Zustand bestimmt wird, falls der mindestens eine TCI-Zustandszeiger auf einen zweiten gemeinsamen/DL-TCI-Zustand zeigt, die WD (22) veranlasst wird, den mindestens einen PDSCH unter Verwendung eines Raumfilters zu empfangen, das zumindest teilweise basierend auf dem zweiten gemeinsamen/DL-TCI-Zustand bestimmt wird, und, falls der mindestens eine TCI-Zustandszeiger auf den ersten und den zweiten gemeinsamen/DL-TCI-Zustand zeigt, die WD (22) veranlasst wird, den mindestens einen PDSCH unter Verwendung eines ersten Raumfilters, das zumindest teilweise basierend auf dem ersten gemeinsamen/DL-TCI-Zustand bestimmt wird, und eines zweiten Raumfilters zu empfangen, das zumindest teilweise basierend auf dem zweiten gemeinsamen/DL-TCI-Zustand bestimmt wird.

4. Verfahren nach Anspruch 3, wobei der mindestens eine TCI-Zustandszeiger aus einer Liste logischer Einträge besteht und wobei jeder Eintrag der Liste logischer Einträge einen der zwei gemeinsamen/DL-TCI-Zustände angibt.

5. Verfahren nach Anspruch 4, wobei die Liste logischer Einträge des mindestens einen TCI-Zustandszeigers einen einzigen Eintrag enthält, der auf den ersten gemeinsamen/DL-TCI-Zustand oder auf den zweiten gemeinsamen/DL-TCI-Zustand zeigt.

6. Verfahren nach Anspruch 4, wobei die Liste logischer Einträge des mindestens einen TCI-Zustandszeigers zwei Einträge enthält und wobei ein erster Eintrag auf den ersten gemeinsamen/DL-TCI-Zustand zeigt und ein zweiter Eintrag auf den zweiten gemeinsamen/DL-TCI-Zustand zeigt.

7. Verfahren nach einem Ansprüche 3-6, ferner umfassend mindestens eines von Folgendem:

- Konfigurieren mindestens eines von zwei TCI-Zustandszeigern für jeden von mindestens einem Steuerressourcensatz, CORESET, um mindestens einen gemeinsamen/DL-TCI-Zustand anzugeben, der für PDCCH in dem CORESET verwendet werden soll,
- Konfigurieren einer Zeitlücke von Y Symbolen zwischen der Übertragen der ersten DCI und der Übertragung eines entsprechenden PDSCH, wobei Y zumindest teilweise auf Fähigkeiten der WD (22) basiert, und
- Konfigurieren eines Codepunkts in einem TCI-Feld in den zweiten DCI, um eine Reihenfolge einer Assoziation zwischen einem TCI-Zustandszeiger des mindestens einen TCI-Zustandszeigers und mindestens einer PDSCH-Übertragungsgelegenheit zu ändern.

8. Drahtlose Vorrichtung, WD, (22), die zum Kommunizieren mit einem Netzwerkknoten (16) konfiguriert ist, wobei die WD (22) zu Folgendem konfiguriert ist:

Empfangen einer Funkressourcensteuerungskonfiguration, RRC-Konfiguration, mindestens eines Übertragungskonfigurationsindikator-Zustandszeigers, TCI-Zustandszeigers, vom Netzwerkknoten (16), wobei der mindestens eine TCI-Zustandszeiger mit mindestens einem gemeinsamen/Downlink-TCI-Zustand, gemeinsamen/DL-TCI-Zustand, assoziiert ist; und
Empfangen erster und zweiter Downlink-Steuerinformationen, DCI, vom Netzwerkknoten (16), wobei die ersten DCI zum Angeben eines ersten gemeinsamen/DL-TCI-Zustands und eines zweiten gemeinsamen/DL-TCI-Zustands konfiguriert sind, wobei die zweiten DCI zum Disponieren eines PDSCH konfiguriert sind, und
Bestimmen mindestens eines Raumfilters, wobei das mindestens eine Raumfilter für den mindestens einen PDSCH verwendet wird, wobei das mindestens eine Raumfilter zumindest teilweise basierend auf einem von dem ersten gemeinsamen/DL-TCI-Zustand und dem zweiten gemeinsamen/DL-TCI-Zustand bestimmt, der zumindest teilweise basierend auf dem mindestens einem TCI-Zustandszeiger ausgewählt wird,
wobei, falls der mindestens eine TCI-Zustandszeiger auf den ersten gemeinsamen/DL-TCI-Zustand zeigt, die WD (22) dazu konfiguriert ist, den mindestens eine PDSCH unter Verwendung eines Raumfilters zu empfangen, das zumindest teilweise basierend auf dem ersten gemeinsamen/DL-TCI-Zustand bestimmt wird, und, falls der mindestens eine TCI-Zustandszeiger auf den zweiten gemeinsamen/DL-TCI-Zustand zeigt, die WD (22) dazu konfiguriert ist, den mindestens einen PDSCH unter Verwendung eines Raumfilters zu empfangen, das zumindest teilweise basierend auf dem zweiten gemeinsamen/DL-TCI-Zustand bestimmt wird, und, falls der mindestens eine TCI-Zustandszeiger auf den ersten gemeinsamen/DL-TCI-Zustand und den zweiten gemeinsamen/DL-TCI-Zustand zeigt, die WD (22) dazu konfiguriert ist, den mindestens einen PDSCH unter Verwendung eines ersten Raumfilters, das zumindest teilweise basierend auf dem ersten gemeinsamen/DL-TCI-Zustand bestimmt wird, und eines zweiten Raumfilters zu empfangen, das zumindest teilweise basierend auf dem zweiten gemeinsamen/DL-TCI-Zustand bestimmt wird.

9. WD (22) nach Anspruch 8, die zum Durchführen eines Verfahren nach einem der Ansprüche 11 bis 13 konfiguriert ist.

10. Verfahren, das von einer drahtlosen Vorrichtung, WD, (22) durchgeführt wird, die zum Kommunizieren mit einem Netzwerkknoten (16) konfiguriert ist, wobei das Verfahren Folgendes umfasst:

Empfangen (S148) einer Funkressourcensteuerungskonfiguration, RRC-Konfiguration, mindestens eines Übertragungskonfigurationsindikator-Zustandszeigers, TCI-Zustandszeigers, vom Netzwerkknoten (16), wobei der mindestens eine TCI-Zustandszeiger mit mindestens einem gemeinsamen/Downlink-TCI-Zustand, gemeinsamen/DL-TCI-Zustand, assoziiert ist;
Empfangen (S150) erster und zweiter Downlink-Steuerinformationen, DCI, vom Netzwerkknoten (16), wobei die ersten DCI zum Angeben eines ersten gemeinsamen/DL-TCI-Zustands und eines zweiten gemeinsamen/DL-TCI-Zustands konfiguriert sind, wobei die zweiten DCI zum Disponieren eines PDSCH konfiguriert sind, und
Bestimmen (S152) mindestens eines Raumfilters, wobei das mindestens eine Raumfilter für den mindestens einen PDSCH verwendet wird, wobei das mindestens eine Raumfilter zumindest teilweise basierend auf einem von dem ersten gemeinsamen/DL-TCI-Zustand und dem zweiten gemeinsamen/DL-TCI-Zustand bestimmt, der zumindest teilweise basierend auf dem mindestens einem TCI-Zustandszeiger ausgewählt wird, wobei, falls der mindestens eine TCI-Zustandszeiger auf den ersten gemeinsamen/DL-TCI-Zustand zeigt, die WD (22) den mindestens eine PDSCH unter Verwendung eines Raumfilters empfängt, das zumindest teilweise basierend auf dem ersten gemeinsamen/DL-TCI-Zustand bestimmt wird und, falls der mindestens eine TCI-Zustandszeiger auf den zweiten gemeinsamen/DL-TCI-Zustand zeigt, die WD (22) den mindestens einen PDSCH unter Verwendung eines Raumfilters empfängt, das zumindest teilweise basierend auf dem zweiten gemeinsamen/DL-TCI-Zustand bestimmt wird, und, falls der mindestens eine TCI-Zustandszeiger auf den ersten gemeinsamen/DL-TCI-Zustand und den zweiten gemeinsamen/DL-TCI-Zustand zeigt, die WD (22) den mindestens einen PDSCH unter Verwendung eines ersten Raumfilters, das zumindest teilweise basierend auf dem ersten gemeinsamen/DL-TCI-Zustand bestimmt wird, und eines zweiten Raumfilters empfängt, das zumindest teilweise basierend auf dem zweiten gemeinsamen/DL-TCI-Zustand bestimmt wird.

11. Verfahren nach Anspruch 10, wobei der mindestens eine TCI-Zustandszeiger aus einer Liste logischer Einträge besteht und wobei jeder Eintrag der Liste logischer Einträge einen der zwei gemeinsamen/DL-TCI-Zustände angibt.

12. Verfahren nach Anspruch 11, wobei die Liste logischer Einträge des mindestens einen TCI-Zustandszeigers einen einzigen Eintrag enthält, der auf den ersten gemeinsamen/DL-TCI-Zustand oder auf den zweiten gemeinsamen/DL-TCI-Zustand zeigt.

13. Verfahren nach Anspruch 10, wobei die Liste logischer Einträge des mindestens einen TCI-Zustandszeigers zwei Einträge enthält und wobei ein erster Eintrag auf den ersten gemeinsamen/DL-TCI-Zustand zeigt und ein zweiter Eintrag auf den zweiten gemeinsamen/DL-TCI-Zustand zeigt.

14. Verfahren, das von einem Netzwerkknoten (16) durchgeführt wird, der zum Kommunizieren mit einer drahtlosen Vorrichtung, WD, (22) konfiguriert ist, wobei das Verfahren Folgendes umfasst:

Übertragen (S154) einer Funkressourcensteuerungskonfiguration, RRC-Konfiguration, mindestens eines gemeinsamen/Downlink-Übertragungskonfigurationsindikator-Zustandszeigers, gemeinsamen/DL-TCI-Zustandszeigers, in einem Steuerressourcensatz, CORESET, wobei der mindestens eine gemeinsame/DL-TCI-Zustandszeiger mit mindestens einem gemeinsamen/Downlink-TCI-Zustand, gemeinsamen/DL-TCI-Zustand, assoziiert ist; und
Übertragen (S156) eines ersten physikalischen Downlink-Steuerkanals, PDCCH, in dem CORESET unter Verwendung eines Raumfilters, das mit einem gemeinsamen/DL-TCI-Zustand des mindestens einen gemeinsamen/DL-TCI-Zustand assoziiert ist; und
Übertragen eines Medienzugriffssteuerungs-Steuerelements, MAC-CE, um mindestens einen gemeinsamen/DL-TCI-Zustand des mindestens einen gemeinsamen/DL-TCI-Zustands zu aktivieren; und
Übertragen erster Downlink-Steuerinformationen, die mindestens einen des mindestens einen aktivierten gemeinsamen/DL-TCI-Zustands angeben,
wobei, falls der mindestens eine TCI-Zustandszeiger auf einen ersten angegebenen gemeinsamen/DL-TCI-Zustand des mindestens einen gemeinsamen/DL-TCI-Zustands zeigt, die WD (22) veranlasst wird, den ersten PDCCH unter Verwendung eines Raumfilters zu empfangen, das zumindest teilweise basierend auf dem ersten gemeinsamen/DL-TCI-Zustand bestimmt wird, falls der mindestens eine TCI-Zustandszeiger auf einen zweiten angegebenen gemeinsamen/DL-TCI-Zustand des mindestens einen gemeinsamen/DL-TCI-Zustands zeigt, die WD (22) veranlasst wird, den ersten PDCCH unter Verwendung eines Raumfilters zu empfangen, das zumindest teilweise basierend auf dem zweiten gemeinsamen/DL-TCI-Zustand bestimmt wird, und, falls der mindestens eine TCI-Zustandszeiger auf einen ersten angegebenen gemeinsamen/DL-TCI-Zustand und einen zweiten angegebenen gemeinsamen/DL-TCI-Zustand des mindestens einen gemeinsamen/DL-TCI-Zustands zeigt, die WD (22) veranlasst wird, den ersten PDCCH unter Verwendung eines ersten Raumfilters, das zumindest teilweise basierend auf dem ersten gemeinsamen/DL-TCI-Zustand bestimmt wird, und eines zweiten Raumfilters zu empfangen, das zumindest teilweise basierend auf dem zweiten gemeinsamen/DL-TCI-Zustand bestimmt wird.

15. Verfahren nach Anspruch 14, wobei der mindestens eine TCI-Zustandszeiger aus einer Liste logischer Einträge besteht und wobei jeder Eintrag der Liste logischer Einträge einen von einer Mehrzahl von gemeinsamen/DL-TCI-Zuständen des mindestens einen gemeinsamen/DL-TCI-Zustands angibt.

16. Verfahren nach Anspruch 15, wobei die Liste logischer Einträge des mindestens einen TCI-Zustandszeigers einen einzigen Eintrag enthält, der auf den ersten gemeinsamen/DL-TCI-Zustand des mindestens einen gemeinsamen/DL-TCI-Zustands oder auf den zweiten gemeinsamen/DL-TCI-Zustand des mindestens einen gemeinsamen/DL-TCI-Zustands zeigt.

17. Verfahren nach Anspruch 15, wobei die Liste logischer Einträge des mindestens einen TCI-Zustandszeigers zwei Einträge enthält und wobei ein erster Eintrag auf den ersten gemeinsamen/DL-TCI-Zustand des mindestens einen gemeinsamen/DL-TCI-Zustands zeigt und ein zweiter Eintrag auf den zweiten gemeinsamen/DL-TCI-Zustand des mindestens einen gemeinsamen/DL-TCI-Zustands zeigt.

18. Netzwerkknoten (16), der zum Kommunizieren mit einer drahtlosen Vorrichtung, WD, (22) konfiguriert ist, wobei der Netzwerkknoten (16) zu Folgendem konfiguriert ist:

Übertragen einer Funkressourcensteuerungskonfiguration, RRC-Konfiguration, mindestens eines gemeinsamen/Downlink-Übertragungskonfigurationsindikator-Zustandszeigers, gemeinsamen/DL-TCI-Zustandszeigers, in einem Steuerressourcensatz, CORESET, wobei der mindestens eine gemeinsame/DL-TCI-Zustandszeiger mit mindestens einem gemeinsamen/Downlink-TCI-Zustand, gemeinsamen/DL-TCI-Zustand, assoziiert ist; und
Übertragen eines ersten physikalischen Downlink-Steuerkanals, PDCCH, in dem CORESET unter Verwendung eines Raumfilters, das mit einem gemeinsamen/DL-TCI-Zustand des mindestens einen gemeinsamen/DL-TCI-Zustand assoziiert ist; und
Übertragen eines Medienzugriffssteuerungs-Steuerelement, MAC-CE, um mindestens einen gemeinsamen/DL-TCI-Zustand des mindestens einen gemeinsamen/DL-TCI-Zustands zu aktivieren; und
Übertragen erster Downlink-Steuerinformationen, die mindestens einen des mindestens einen aktivierten gemeinsamen/DL-TCI-Zustands angeben,
wobei, falls der mindestens eine TCI-Zustandszeiger auf einen ersten angegebenen gemeinsamen/DL-TCI-Zustand des mindestens einen gemeinsamen/DL-TCI-Zustands zeigt, die WD (22) veranlasst wird, den ersten PDCCH unter Verwendung eines Raumfilters zu empfangen, das zumindest teilweise basierend auf dem ersten gemeinsamen/DL-TCI-Zustand bestimmt wird, falls der mindestens eine TCI-Zustandszeiger auf einen zweiten angegebenen gemeinsamen/DL-TCI-Zustand des mindestens einen gemeinsamen/DL-TCI-Zustands zeigt, die WD (22) veranlasst wird, den ersten PDCCH unter Verwendung eines Raumfilters zu empfangen, das zumindest teilweise basierend auf dem zweiten gemeinsamen/DL-TCI-Zustand bestimmt wird, und, falls der mindestens eine TCI-Zustandszeiger auf einen ersten angegebenen gemeinsamen/DL-TCI-Zustand und einen zweiten angegebenen gemeinsamen/DL-TCI-Zustand des mindestens einen gemeinsamen/DL-TCI-Zustands zeigt, die WD (22) veranlasst wird, den ersten PDCCH unter Verwendung eines ersten Raumfilters, das zumindest teilweise basierend auf dem ersten gemeinsamen/DL-TCI-Zustand bestimmt wird, und eines zweiten Raumfilters zu empfangen, das zumindest teilweise basierend auf dem zweiten gemeinsamen/DL-TCI-Zustand bestimmt wird.

19. Verfahren, das von einer drahtlosen Vorrichtung, WD, (22) durchgeführt wird, die zum Kommunizieren mit einem Netzwerkknoten (16) konfiguriert ist, wobei das Verfahren Folgendes umfasst:

Empfangen (S158) einer Funkressourcensteuerungskonfiguration, RRC-Konfiguration, mindestens eines gemeinsamen/Downlink-Übertragungskonfigurationsindikator-Zustandszeigers, gemeinsamen/DL-TCI-Zustandszeigers, in einem Steuerressourcensatz, CORESET, vom Netzwerkknoten (16), wobei der mindestens eine gemeinsame/DL-TCI-Zustandszeiger mit mindestens einem gemeinsamen/Downlink-TCI-Zustand, gemeinsamen/DL-TCI-Zustand, assoziiert ist; und
Empfangen (S160) eines ersten physikalischen Downlink-Steuerkanals, PDCCH, in dem CORESET vom Netzwerkknoten (16) unter Verwendung eines Raumfilters, das mit einem gemeinsamen/DL-TCI-Zustand des mindestens einen gemeinsamen/DL-TCI-Zustand assoziiert ist; und
Empfangen eines Medienzugriffssteuerungs-Steuerelement, MAC-CE, vom Netzwerkknoten (16), um mindestens einen gemeinsamen/DL-TCI-Zustand des mindestens einen gemeinsamen/DL-TCI-Zustands zu aktivieren;
Empfangen erster Downlink-Steuerinformationen, die mindestens einen des mindestens einen aktivierten gemeinsamen/DL-TCI-Zustands angeben,
wobei, falls der mindestens eine TCI-Zustandszeiger auf einen ersten angegebenen gemeinsamen/DL-TCI-Zustand des mindestens einen gemeinsamen/DL-TCI-Zustands zeigt, die WD (22) den ersten PDCCH unter Verwendung eines Raumfilters empfängt, das zumindest teilweise basierend auf dem ersten gemeinsamen/DL-TCI-Zustand bestimmt wird, falls der mindestens eine TCI-Zustandszeiger auf einen zweiten angegebenen gemeinsamen/DL-TCI-Zustand des mindestens einen gemeinsamen/DL-TCI-Zustands zeigt, die WD (22) den ersten PDCCH unter Verwendung eines Raumfilters empfängt, das zumindest teilweise basierend auf dem zweiten gemeinsamen/DL-TCI-Zustand bestimmt wird, und, falls der mindestens eine TCI-Zustandszeiger auf einen ersten angegebenen gemeinsamen/DL-TCI-Zustand und einen zweiten angegebenen gemeinsamen/DL-TCI-Zustand des mindestens einen gemeinsamen/DL-TCI-Zustands zeigt, die WD (22) den ersten PDCCH unter Verwendung eines ersten Raumfilters, das zumindest teilweise basierend auf dem ersten gemeinsamen/DL-TCI-Zustand bestimmt wird, und eines zweiten Raumfilters empfängt, das zumindest teilweise basierend auf dem zweiten gemeinsamen/ DL DL-TCI-Zustand bestimmt wird.

20. Verfahren nach Anspruch 19, wobei der mindestens eine TCI-Zustandszeiger aus einer Liste logischer Einträge besteht und wobei jeder Eintrag der Liste logischer Einträge einen von einer Mehrzahl von gemeinsamen/DL-TCI-Zuständen des mindestens einen gemeinsamen/DL-TCI-Zustands angibt.

21. Verfahren nach Anspruch 20, wobei die Liste logischer Einträge des mindestens einen TCI-Zustandszeigers einen einzigen Eintrag enthält, der auf den ersten gemeinsamen/DL-TCI-Zustand des mindestens einen gemeinsamen/DL-TCI-Zustands oder auf den zweiten gemeinsamen/DL-TCI-Zustand des mindestens einen gemeinsamen/DL-TCI-Zustands zeigt.

22. Verfahren nach Anspruch 20, wobei die Liste logischer Einträge des mindestens einen TCI-Zustandszeigers zwei Einträge enthält und wobei ein erster Eintrag auf den ersten gemeinsamen/DL-TCI-Zustand des mindestens einen gemeinsamen/DL-TCI-Zustands zeigt und ein zweiter Eintrag auf den zweiten gemeinsamen/DL-TCI-Zustand des mindestens einen gemeinsamen/DL-TCI-Zustands zeigt.

23. Drahtlose Vorrichtung, WD, (22), die zum Kommunizieren mit einem Netzwerkknoten (16) konfiguriert ist, wobei die WD (22) zu Folgendem konfiguriert ist:

Empfangen einer Funkressourcensteuerungskonfiguration, RRC-Konfiguration, mindestens eines gemeinsamen/Downlink-Übertragungskonfigurationsindikator-Zustandszeigers, gemeinsamen/DL-TCI-Zustandszeigers, in einem Steuerressourcensatz, CORESET, vom Netzwerkknoten (16), wobei der mindestens eine gemeinsame/DL-TCI-Zustandszeiger mit mindestens einem gemeinsamen/Downlink-TCI-Zustand, gemeinsamen/DL-TCI-Zustand, assoziiert ist; und
Empfangen eines ersten physikalischen Downlink-Steuerkanals, PDCCH, in dem CORESET vom Netzwerkknoten (16) unter Verwendung eines Raumfilters, das mit einem gemeinsamen/DL-TCI-Zustand des mindestens einen gemeinsamen/DL-TCI-Zustand assoziiert ist; und
Empfangen eines Medienzugriffssteuerungs-Steuerelement, MAC-CE, vom Netzwerkknoten (16), um mindestens einen gemeinsamen/DL-TCI-Zustand des mindestens einen gemeinsamen/DL-TCI-Zustands zu aktivieren;
Empfangen erster Downlink-Steuerinformationen, die mindestens einen des mindestens einen aktivierten gemeinsamen/DL-TCI-Zustands angeben,
wobei, falls der mindestens eine TCI-Zustandszeiger auf einen ersten angegebenen gemeinsamen/DL-TCI-Zustand des mindestens einen gemeinsamen/DL-TCI-Zustands zeigt, die WD (22) dazu konfiguriert ist, den ersten PDCCH unter Verwendung eines Raumfilters zu empfangen, das zumindest teilweise basierend auf dem ersten gemeinsamen/DL-TCI-Zustand bestimmt wird, falls der mindestens eine TCI-Zustandszeiger auf einen zweiten angegebenen gemeinsamen/DL-TCI-Zustand des mindestens einen gemeinsamen/DL-TCI-Zustands zeigt, die WD (22) dazu konfiguriert ist, den ersten PDCCH unter Verwendung eines Raumfilters zu empfangen, das zumindest teilweise basierend auf dem zweiten gemeinsamen/DL-TCI-Zustand bestimmt wird und, falls der mindestens eine TCI-Zustandszeiger auf einen ersten angegebenen gemeinsamen/DL-TCI-Zustand und einen zweiten angegebenen gemeinsamen/DL-TCI-Zustand des mindestens einen gemeinsamen/DL-TCI-Zustands zeigt, die WD (22) dazu konfiguriert ist, den ersten PDCCH unter Verwendung eines ersten Raumfilters, das zumindest teilweise basierend auf dem ersten gemeinsamen/DL-TCI-Zustand bestimmt wird, und eines zweiten Raumfilters zu empfangen, das zumindest teilweise basierend auf dem zweiten gemeinsamen/ DL DL-TCI-Zustand bestimmt wird.

**Revendications**

1. Nœud de réseau (16) configuré pour communiquer avec un dispositif sans fil, WD (22), le nœud de réseau (16) étant configuré pour :

configurer le WD (22) avec une configuration de commande de ressources radio, RRC, d'au moins un pointeur d'état d'indicateur de configuration de transmission, TCI, le pointeur d'état TCI étant associé à au moins un état TCI commun/de liaison descendante, DL ; et
transmettre des premières et deuxièmes informations de commande de liaison descendante, DCI, les premières DCI étant configurées pour indiquer un premier état TCI commun/DL et un deuxième état TCI commun/DL, les deuxièmes DCI étant configurées pour planifier un PDSCH,
dans lequel, si l'au moins un pointeur d'état TCI pointe vers le premier état TCI commun/DL, le WD (22) est amené à recevoir l'au moins un PDSCH à l'aide d'un filtre spatial déterminé sur la base au moins en partie du premier état TCI commun/DL ; si l'au moins un pointeur d'état TCI pointe vers un deuxième état TCI commun/DL, le WD (22) est amené à recevoir l'au moins un PDSCH à l'aide d'un filtre spatial déterminé sur la base au moins en partie du deuxième état TCI commun/DL ; et, si l'au moins un pointeur d'état TCI pointe vers le premier état TCI commun/DL et le deuxième état TCI commun/DL, le WD (22) est amené à recevoir l'au moins un PDSCH à l'aide d'un premier filtre spatial déterminé sur la base au moins en partie du premier état TCI commun/DL et d'un deuxième filtre spatial déterminé sur la base au moins en partie du deuxième état TCI commun/DL.

2. Nœud de réseau (16) selon la revendication 1, configuré pour réaliser un procédé selon l'une quelconque des revendications 4 à 7.

3. Procédé réalisé par un nœud de réseau (16) configuré pour communiquer avec un dispositif sans fil, WD (22), le procédé comprenant :

la configuration (S144) du WD (22) avec une configuration de commande de ressources radio, RRC, d'au moins un pointeur d'état d'indicateur de configuration de transmission, TCI, l'au moins un pointeur d'état TCI étant associé à au moins un état TCI commun/de liaison descendante, DL ; et
la transmission (S146) de premières et deuxièmes informations de commande de liaison descendante, DCI, les premières DCI étant configurées pour indiquer un premier état TCI commun/DL et un deuxième état TCI commun/DL, les deuxièmes DCI étant configurées pour planifier un PDSCH,
dans lequel, si l'au moins un pointeur d'état TCI pointe vers le premier état TCI commun/DL, le WD (22) est amené à recevoir l'au moins un PDSCH à l'aide d'un filtre spatial déterminé sur la base au moins en partie du premier état TCI commun/DL ; si l'au moins un pointeur d'état TCI pointe vers un deuxième état TCI commun/DL, le WD (22) est amené à recevoir l'au moins un PDSCH à l'aide d'un filtre spatial déterminé sur la base au moins en partie du deuxième état TCI commun/DL ; et, si l'au moins un pointeur d'état TCI pointe vers le premier état TCI commun/DL et le deuxième état TCI commun/DL, le WD (22) est amené à recevoir l'au moins un PDSCH à l'aide d'un premier filtre spatial déterminé sur la base au moins en partie du premier état TCI commun/DL et d'un deuxième filtre spatial déterminé sur la base au moins en partie du deuxième état TCI commun/DL.

4. Procédé selon la revendication 3, dans lequel l'au moins un pointeur d'état TCI est constitué d'une liste d'entrées logiques, et dans lequel chaque entrée de la liste d'entrées logiques indique l'un des deux états TCI commun/DL.

5. Procédé selon la revendication 4, dans lequel la liste d'entrées logiques de l'au moins un pointeur d'état TCI contient une entrée unique pointant vers le premier état TCI commun/DL ou vers le deuxième état TCI commun/DL.

6. Procédé selon la revendication 4, dans lequel la liste d'entrées logiques de l'au moins un pointeur d'état TCI contient deux entrées, et dans lequel une première entrée pointe vers le premier état TCI commun/DL et une deuxième entrée pointe vers le deuxième état TCI commun/DL.

7. Procédé selon l'une quelconque des revendications 3 à 6, comprenant en outre au moins l'une parmi :

- la configuration d'au moins l'un de deux pointeurs d'état TCI pour chacun d'au moins un ensemble de ressources de commande, CORESET, pour indiquer au moins un état TCI commun/DL à utiliser pour un PDCCH dans le CORESET,
- la configuration d'un laps de temps de Y symboles entre une transmission des premières DCI et une transmission d'un PDSCH correspondant, Y étant basé au moins en partie sur des capacités de WD (22), et
- la configuration d'un point de code dans un champ TCI dans les deuxièmes DCI pour changer un ordre d'association entre un pointeur d'état TCI de l'au moins un pointeur d'état TCI et au moins une occasion de transmission de PDSCH.

8. Dispositif sans fil, WD (22), configuré pour communiquer avec un nœud de réseau (16), le WD (22) étant configuré pour :

recevoir, depuis le nœud de réseau (16), une configuration de commande de ressources radio, RRC, d'au moins un pointeur d'état d'indicateur de configuration de transmission, TCI, l'au moins un pointeur d'état TCI étant associé à au moins un état TCI commun/de liaison descendante, DL ;
recevoir, depuis le nœud de réseau (16), des premières et deuxièmes informations de commande de liaison descendante, DCI, les premières DCI étant configurées pour indiquer un premier état TCI commun/DL et un deuxième état TCI commun/DL, les deuxièmes DCI étant configurées pour planifier au moins un PDSCH ; et
déterminer au moins un filtre spatial, l'au moins un filtre spatial étant utilisé pour l'au moins un PDSCH, l'au moins un filtre spatial étant déterminé sur la base au moins en partie de l'un du premier état TCI commun/DL et du deuxième état TCI commun/DL sélectionné sur la base au moins en partie de l'au moins un pointeur d'état TCI, dans lequel, si l'au moins un pointeur d'état TCI pointe vers le premier état TCI commun/DL, le WD (22) est configuré pour recevoir l'au moins un PDSCH à l'aide d'un filtre spatial déterminé sur la base au moins en partie du premier état TCI commun/DL ; si l'au moins un pointeur d'état TCI pointe vers le deuxième état TCI commun/DL, le WD (22) est configuré pour recevoir l'au moins un PDSCH à l'aide d'un filtre spatial déterminé sur la base au moins en partie du deuxième état TCI commun/DL ; et, si l'au moins un pointeur d'état TCI pointe vers le premier état TCI commun/DL et le deuxième état TCI commun/DL, le WD (22) est configuré pour recevoir l'au moins un PDSCH à l'aide d'un premier filtre spatial déterminé sur la base au moins en partie du premier état TCI commun/DL et d'un deuxième filtre spatial déterminé sur la base au moins en partie du deuxième état TCI commun/DL.

9. WD (22) selon la revendication 8, configuré pour réaliser un procédé selon l'une quelconque des revendications 11 à 13.

10. Procédé réalisé par un dispositif sans fil, WD (22), configuré pour communiquer avec un nœud de réseau (16), le procédé comprenant :

la réception (S148), depuis le nœud de réseau (16), d'une configuration de commande de ressources radio, RRC, d'au moins un pointeur d'état d'indicateur de configuration de transmission, TCI, l'au moins un pointeur d'état TCI étant associé à au moins un état TCI commun/de liaison descendante, DL ;
la réception (S150), depuis le nœud de réseau (16), de premières et deuxièmes informations de commande de liaison descendante, DCI, les premières DCI étant configurées pour indiquer un premier état TCI commun/DL et un deuxième état TCI commun/DL, les deuxièmes DCI étant configurées pour planifier au moins un PDSCH ; et
la détermination (S152) d'au moins un filtre spatial, l'au moins un filtre spatial étant utilisé pour l'au moins un PDSCH, l'au moins un filtre spatial étant déterminé sur la base au moins en partie de l'un du premier état TCI commun/DL et du deuxième état TCI commun/DL sélectionné sur la base au moins en partie de l'au moins un pointeur d'état TCI,
dans lequel, si l'au moins un pointeur d'état TCI pointe vers le premier état TCI commun/DL, le WD (22) reçoit l'au moins un PDSCH à l'aide d'un filtre spatial déterminé sur la base au moins en partie du premier état TCI commun/DL ; si l'au moins un pointeur d'état TCI pointe vers le deuxième état TCI commun/DL, le WD (22) reçoit l'au moins un PDSCH à l'aide d'un filtre spatial déterminé sur la base au moins en partie du deuxième état TCI commun/DL ; et, si l'au moins un pointeur d'état TCI pointe vers le premier état TCI commun/DL et le deuxième état TCI commun/DL, le WD (22) reçoit l'au moins un PDSCH à l'aide d'un premier filtre spatial déterminé sur la base au moins en partie du premier état TCI commun/DL et d'un deuxième filtre spatial déterminé sur la base au moins en partie du deuxième état TCI commun/DL.

11. Procédé selon la revendication 10, dans lequel l'au moins un pointeur d'état TCI est constitué d'une liste d'entrées logiques, et dans lequel chaque entrée de la liste d'entrées logiques indique l'un des deux états TCI commun/DL.

12. Procédé selon la revendication 11, dans lequel la liste d'entrées logiques de l'au moins un pointeur d'état TCI contient une entrée unique pointant vers le premier état TCI commun/DL ou vers le deuxième état TCI commun/DL.

13. Procédé selon la revendication 10, dans lequel la liste d'entrées logiques de l'au moins un pointeur d'état TCI contient deux entrées, dans lequel une première entrée pointe vers le premier état TCI commun/DL et une deuxième entrée pointe vers le deuxième état TCI commun/DL.

14. Procédé réalisé par un nœud de réseau (16) configuré pour communiquer avec un dispositif sans fil, WD (22), le procédé comprenant :

la transmission (S154) d'une configuration de commande de ressources radio, RRC, d'au moins un pointeur d'état d'indicateur de configuration de transmission, TCI, commun/de liaison descendante, DL, dans un ensemble de ressources de commande, CORESET, l'au moins un pointeur d'état TCI commun/DL étant associé à au moins un état TCI commun/DL ;

la transmission (S156) d'un premier canal de commande de liaison descendante physique, PDCCH, dans le CORESET à l'aide d'un filtre spatial associé à un état TCI commun/DL de l'au moins un état TCI commun/DL ; et la transmission d'un élément de commande, CE, de commande d'accès au support, MAC, pour activer au moins un état TCI commun/DL de l'au moins un état TCI commun/DL ; et

la transmission de premières informations de commande de liaison descendante, DCI, indiquant au moins un de l'au moins un état TCI commun/DL activé,

dans lequel, si l'au moins un pointeur d'état TCI pointe vers un premier état TCI commun/DL indiqué de l'au moins un état TCI commun/DL, le WD (22) est amené à recevoir le premier PDCCH à l'aide d'un filtre spatial déterminé sur la base au moins en partie du premier état TCI commun/DL ; si l'au moins un pointeur d'état TCI pointe vers un deuxième état TCI commun/DL indiqué de l'au moins un état TCI commun/DL, le WD (22) est amené à recevoir le premier PDCCH à l'aide d'un filtre spatial déterminé sur la base au moins en partie du deuxième état TCI commun/DL ; et, si l'au moins un pointeur d'état TCI pointe vers un premier état TCI commun/DL indiqué et un deuxième état TCI commun/DL indiqué de l'au moins un état TCI commun/DL, le WD (22) est amené à recevoir le premier PDCCH à l'aide d'un premier filtre spatial déterminé sur la base au moins en partie du premier état TCI commun/DL et d'un deuxième filtre spatial déterminé sur la base au moins en partie du deuxième état TCI commun/DL.

15. Procédé selon la revendication 14, dans lequel l'au moins un pointeur d'état TCI est constitué d'une liste d'entrées logiques, et dans lequel chaque entrée de la liste d'entrées logiques indique l'un d'une pluralité d'états TCI commun/DL de l'au moins un état TCI commun/DL.

16. Procédé selon la revendication 15, dans lequel la liste d'entrées logiques de l'au moins un pointeur d'état TCI contient une entrée unique pointant vers le premier état TCI commun/DL de l'au moins un état TCI commun/DL ou vers le deuxième état TCI commun/DL de l'au moins un état TCI commun/DL.

17. Procédé selon la revendication 15, dans lequel la liste d'entrées logiques de l'au moins un pointeur d'état TCI contient deux entrées, dans lequel une première entrée pointe vers le premier état TCI commun/DL de l'au moins un état TCI commun/DL et une deuxième entrée pointe vers le deuxième état TCI commun/DL de l'au moins un état TCI commun/DL.

18. Nœud de réseau (16) configuré pour communiquer avec un dispositif sans fil, WD (22), le nœud de réseau (16) étant configuré pour :

transmettre une configuration de commande de ressources radio, RRC, d'au moins un pointeur d'état d'indicateur de configuration de transmission, TCI, commun/de liaison descendante, DL, dans un ensemble de ressources de commande, CORESET, l'au moins un pointeur d'état TCI commun/DL étant associé à au moins un état TCI commun/DL ;

transmettre un premier canal de commande de liaison descendante physique, PDCCH, dans le CORESET à l'aide d'un filtre spatial associé à un état TCI commun/DL de l'au moins un état TCI commun/DL ; et transmettre un élément de commande, CE, de commande d'accès au support, MAC, pour activer au moins un état TCI commun/DL de l'au moins un état TCI commun/DL ; et

transmettre des premières informations de commande de liaison descendante, DCI, indiquant au moins un de l'au moins un état TCI commun/DL activé,

dans lequel, si l'au moins un pointeur d'état TCI pointe vers un premier état TCI commun/DL indiqué de l'au moins un état TCI commun/DL, le WD (22) est amené à recevoir le premier PDCCH à l'aide d'un filtre spatial déterminé sur la base au moins en partie du premier état TCI commun/DL ; si l'au moins un pointeur d'état TCI pointe vers un deuxième état TCI commun/DL indiqué de l'au moins un état TCI commun/DL, le WD (22) est amené à recevoir le premier PDCCH à l'aide d'un filtre spatial déterminé sur la base au moins en partie du deuxième état TCI commun/DL ; et, si l'au moins un pointeur d'état TCI pointe vers un premier état TCI commun/DL indiqué et un deuxième état TCI commun/DL indiqué de l'au moins un état TCI commun/DL, le WD (22) est amené à recevoir le premier PDCCH à l'aide d'un premier filtre spatial déterminé sur la base au moins en partie du premier état TCI commun/DL et d'un deuxième filtre spatial déterminé sur la base au moins en partie du deuxième état TCI commun/DL.

19. Procédé réalisé par un dispositif sans fil, WD (22), configuré pour communiquer avec un nœud de réseau (16), le procédé comprenant :

la réception (S158), depuis le nœud de réseau (16), d'une configuration de commande de ressources radio, RRC, d'au moins un pointeur d'état d'indicateur de configuration de transmission, TCI, commun/de liaison descendante, DL, dans un ensemble de ressources de commande, CORESET, l'au moins un pointeur d'état TCI commun/DL étant associé à au moins un état TCI commun/DL ;

la réception (S160), depuis le nœud de réseau (16), d'un premier canal de commande de liaison descendante physique, PDCCH, dans le CORESET à l'aide d'un filtre spatial associé à un état TCI commun/DL de l'au moins un état TCI commun/DL ; et

la réception, depuis le nœud de réseau (16), d'un élément de commande, CE, de commande d'accès au support, MAC, pour activer au moins un état TCI commun/DL de l'au moins un état TCI commun/DL ;

la réception de premières informations de commande de liaison descendante, DCI, indiquant au moins un de l'au moins un état TCI commun/DL activé,

dans lequel, si l'au moins un pointeur d'état TCI pointe vers un premier état TCI commun/DL indiqué de l'au moins un état TCI commun/DL, le WD (22) reçoit le premier PDCCH à l'aide d'un filtre spatial déterminé sur la base au moins en partie du premier état TCI commun/DL ; si l'au moins un pointeur d'état TCI pointe vers un deuxième état TCI commun/DL indiqué de l'au moins un état TCI commun/DL, le WD (22) reçoit le premier PDCCH à l'aide d'un filtre spatial déterminé sur la base au moins en partie du deuxième état TCI commun/DL ; et, si l'au moins un pointeur d'état TCI pointe vers un premier état TCI commun/DL indiqué et un deuxième état TCI commun/DL indiqué de l'au moins un état TCI commun/DL, le WD (22) reçoit le premier PDCCH à l'aide d'un premier filtre spatial déterminé sur la base au moins en partie du premier état TCI commun/DL et d'un deuxième filtre spatial déterminé sur la base au moins en partie du deuxième état TCI commun/DL.

20. Procédé selon la revendication 19, dans lequel l'au moins un pointeur d'état TCI est constitué d'une liste d'entrées logiques, et dans lequel chaque entrée de la liste d'entrées logiques indique l'un d'une pluralité d'états TCI commun/DL de l'au moins un état TCI commun/DL.

21. Procédé selon la revendication 20, dans lequel la liste d'entrées logiques de l'au moins un pointeur d'état TCI contient une entrée unique pointant vers le premier état TCI commun/DL de l'au moins un état TCI commun/DL ou vers le deuxième état TCI commun/DL de l'au moins un état TCI commun/DL.

22. Procédé selon la revendication 20, dans lequel la liste d'entrées logiques de l'au moins un pointeur d'état TCI contient deux entrées, dans lequel une première entrée pointe vers le premier état TCI commun/DL de l'au moins un état TCI commun/DL et une deuxième entrée pointe vers le deuxième état TCI commun/DL de l'au moins un état TCI commun/DL.

23. Dispositif sans fil, WD (22), configuré pour communiquer avec un nœud de réseau (16), le WD (22) étant configuré pour :

recevoir, depuis le nœud de réseau (16), une configuration de commande de ressources radio, RRC, d'au moins un pointeur d'état d'indicateur de configuration de transmission, TCI, commun/de liaison descendante, DL, dans un ensemble de ressources de commande, CORESET, l'au moins un pointeur d'état TCI commun/DL étant associé à au moins un état TCI commun/DL ;

recevoir, depuis le nœud de réseau (16), un premier canal de commande de liaison descendante physique, PDCCH, dans le CORESET à l'aide d'un filtre spatial associé à un état TCI commun/DL de l'au moins un état TCI commun/DL ; et

recevoir, depuis le nœud de réseau (16), un élément de commande, CE, de commande d'accès au support, MAC, pour activer au moins un état TCI commun/DL de l'au moins un état TCI commun/DL ;

recevoir des premières informations de commande de liaison descendante, DCI, indiquant au moins un de l'au moins un état TCI commun/DL activé,

dans lequel, si l'au moins un pointeur d'état TCI pointe vers un premier état TCI commun/DL indiqué de l'au moins un état TCI commun/DL, le WD (22) est configuré pour recevoir le premier PDCCH à l'aide d'un filtre spatial déterminé sur la base au moins en partie du premier état TCI commun/DL ; si l'au moins un pointeur d'état TCI pointe vers un deuxième état TCI commun/DL indiqué de l'au moins un état TCI commun/DL, le WD (22) est configuré pour recevoir le premier PDCCH à l'aide d'un filtre spatial déterminé sur la base au moins en partie du deuxième état TCI commun/DL ; et, si l'au moins un pointeur d'état TCI pointe vers un premier état TCI commun/DL indiqué et un deuxième état TCI commun/DL indiqué de l'au moins un état TCI commun/DL, le WD (22) est configuré pour recevoir le premier PDCCH à l'aide d'un premier filtre spatial déterminé sur la base au moins en partie du premier état TCI commun/DL et d'un deuxième filtre spatial déterminé sur la base au moins en partie du deuxième état TCI commun/DL.

One slot (14 symbols)

PDCH (data)    Control (PDCCH), possibly data

## FIG. 1

Resource Element    Resource Block

OFDM symbol #
0 1 2 3 4 5 6 7 8 9 10 11 12 13

Subcarriers
11 10 9 8 7 6 5 4 3 2 1 0

a 14-symbol slot    one slot

system bandwidth

Frequency

Time

## FIG. 2

**FIG. 3**

**FIG. 4**

Beam 1 associated with the 1st TCI state

TRP1

WD

TRP2

Beam 1 associated with the 2nd TCI state

Cyclic mapping:

1st occasion · · · · 3rd occasion

DCI → PDSCH | PDSCH | PDSCH | PDSCH | Time →

indicates two
TCI states

2nd occasion · · · · 4th occasion

Sequential mapping:

1st occasion · · · · 3rd occasion

DCI → PDSCH | PDSCH | PDSCH | PDSCH | Time →

indicates two
TCI states

2nd occasion · · · · 4th occasion

| PDSCH | from TRP1        | PDSCH | from TRP2

*FIG. 5*

**FIG. 6**

**FIG. 7**

BEGIN

Host computer
provides user
data
S100

⇔

Host computer
executes host
application
S102

BEGIN

Host computer
initiates
transmission
carrying the user
data to the
wireless device
S104

Host computer
provides user
data
S110

Network node
transmits the
user data
S106

Host computer
initiates
transmission
carrying the user
data to the
wireless device
S112

Wireless device
executes client
application
S108

Wireless device
receives the
user data
S114

END

END

*FIG. 8*

*FIG. 9*

BEGIN

Wireless device
receives input
data provided
at host computer
S116

Wireless device
executes client
application
S118

Wireless device
provides user
data
S120

Wireless device
executes client
application
S122

Wireless device
initiates
transmission of
the user data to
the host
computer
S124

Host computer
receives user
data transmitted
from the wireless
device
S126

END

**FIG. 10**

BEGIN

Network node
receives user
data from
wireless device
S128

Network node
initiates
transmission of
user data to the
host
computer
S130

Host computer
receives the
user data
S132

END

**FIG. 11**

BEGIN

Configure The WD With A Radio Resource Control (RRC) Configuration
Of Transmission Configuration Indicator (TCI) State Pointers, A First
TCI State Pointer Being Associated With A First Indicated Joint/downlink
(DL) TCI State, A Second TCI State Pointer Being Associated With A
Second Indicated Joint/DL TCI State

S134

Transmit First And Second Downlink Control Information (DCI), The First
DCI Configured To One Of Activate And Indicate A Pair Of Unified TCI
States, The Second DCI Configured To Schedule A First Physical Downlink
Shared Channel (PDSCH) Reception And A Second PDSCH Reception

S136

END

*FIG. 12*

```
              ┌─────────────┐
              │    BEGIN     │
              └──────┬───────┘
                     │
                     ▼
┌────────────────────────────────────────────────────────┐
│ Receive From The Network Node A Radio Resource Control   │
│ (RRC) Configuration Of Transmission Configuration        │
│ Indicator (TCI) State Pointers, A First TCI State Pointer │
│ Being Associated With A First Indicated Joint/downlink   │
│ (DL) TCI State, A Second TCI State Pointer Being         │
│ Associated With A Second Indicated Joint/DL TCI State     │
│                                                          │
│                       S138                               │
└────────────────────────┬───────────────────────────────┘
                         │
                         ▼
┌────────────────────────────────────────────────────────┐
│ Receive From The Network Node, First And Second          │
│ Downlink Control Information (DCI), The First DCI         │
│ Configured To One Of Activate And Indicate A Pair Of     │
│ Unified TCI States, The Second DCI Configured To         │
│ Schedule A First Physical Downlink Shared Channel         │
│ (PDSCH) Reception And A Second PDSCH Reception           │
│                                                          │
│                       S140                               │
└────────────────────────┬───────────────────────────────┘
                         │
                         ▼
┌────────────────────────────────────────────────────────┐
│ Determine First And Second Spatial Filters, The First    │
│ Spatial Filter Being Determined For The First PDSCH       │
│ Reception Based On A First One Of An Activated And        │
│ Indicated Unified TCI State Associated With The First TCI │
│ State Pointer, The Second Spatial Filter Being            │
│ Determined For The Second PDSCH Reception Based On A      │
│ Second One Of An Activated And Indicated Unified TCI      │
│ State Associated With The Second TCI State Pointer        │
│                                                          │
│                       S142                               │
└────────────────────────┬───────────────────────────────┘
                         │
                         ▼
              ┌─────────────┐
              │     END      │
              └─────────────┘
```

*FIG. 13*

BEGIN

Configure The WD With A Radio Resource Control, RRC, Configuration
Of At Least One Transmission Configuration Indicator, TCI, State Pointer,
The At Least One TCI State Pointer Being Associated With At Least
One Indicated Joint/downlink, DL, TCI State

S144

Transmit First And Second Downlink Control Information, DCI, The First
DCI Configured To Indicate A First And A Second Joint/DL TCI State,
The Second DCI Configured To Schedule PDSCH

S146

END

*FIG. 14*

BEGIN

Receive From The Network Node A Radio Resource Control, RRC, Configuration Of At Least One Transmission Configuration Indicator, TCI, State Pointer, The At Least One TCI State Pointer Being Associated With At Least One Joint/downlink, DL, TCI State

S148

Receive From The Network Node, First And Second Downlink Control Information, DCI, The First DCI Configured To Indicate A First And A Second Joint/DL TCI State, The Second DCI Configured To Schedule At Least One PDSCH

S150

Determine At Least One Spatial Filter, The At Least One Spatial Filter Being Used For The At Least One PDSCH Reception, The At Least One Spatial Filter Being Determined Based On One Of The First And Second Indicated Joint/DL TCI State Selected Based On The At Least One TCI State Pointer

S152

END

*FIG. 15*

```
                    ┌─────────────┐
                    │    BEGIN    │
                    └─────────────┘
                           │
                           ▼
┌──────────────────────────────────────────────────────────┐
│  Transmit A Radio Resource Control, RRC, Configuration Of  │
│  At Least One Joint/downlink, DL, Transmission             │
│  Configuration Indicator, TCI, State Pointer In A Control  │
│  Resource Set, CORESET, The At Least One Joint/DL TCI      │
│  State Pointer Being Associated With At Least One Joint/DL │
│  State                                                     │
│                          S154                              │
└──────────────────────────────────────────────────────────┘
                           │
                           ▼
┌──────────────────────────────────────────────────────────┐
│  Transmit A First Physical Downlink Control Channel,       │
│  PDCCH, In The CORESET Using A Spatial Filter Associated   │
│  With A Joint/DL TCI State Of The At Least One Joint/DL    │
│  TCI State                                                 │
│                          S156                              │
└──────────────────────────────────────────────────────────┘
                           │
                           ▼
                    ┌─────────────┐
                    │     END     │
                    └─────────────┘
```

## FIG. 16

```
                    ┌─────────────┐
                    │    BEGIN    │
                    └─────────────┘
                           │
                           ▼
┌──────────────────────────────────────────────────────────┐
│  Receive From The Network Node A Radio Resource Control,   │
│  RRC, Configuration Of At Least One Joint/downlink, DL,    │
│  Transmission Configuration Indicator, TCI, State Pointer  │
│  In A Control Resource Set, CORESET, The At Least One      │
│  Joint/DL TCI State Pointer Being Associated With At Least │
│  One Joint/DL State                                        │
│                          S158                              │
└──────────────────────────────────────────────────────────┘
                           │
                           ▼
┌──────────────────────────────────────────────────────────┐
│  Receive From The Network Node A First Physical Downlink   │
│  Control Channel, PDCCH, In The CORESET Using A Spatial    │
│  Filter Associated With A Joint/DL TCI State Of The At     │
│  Least One Joint/DL TCI State                              │
│                          S160                              │
└──────────────────────────────────────────────────────────┘
                           │
                           ▼
                    ┌─────────────┐
                    │     END     │
                    └─────────────┘
```

## FIG. 17

MAC CE activates:

- ○ {TCI state $k_{i,1}$, TCI state $k_{i,2}$, TCI state $k_{i,3}$, TCI state $k_{i,4}$} for TCI codepoint i
- ○ TCI state $k_{i,1}$ is associated with beam 1, TCI state $k_{i,2}$ is associated with beam 2
- ○ TCI state $k_{i,3}$ is associated with beam 3, TCI state $k_{i,4}$ is associated with beam 4

**FIG. 18**

**FIG. 19**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022031546 A1